(19) Europäisches Patentamt
European Patent Office
Office européen des brevets

(11) EP 3 133 112 B1

(12) EUROPÄISCHE PATENTSCHRIFT

(45) Veröffentlichungstag und Bekanntmachung des Hinweises auf die Patenterteilung:
**19.01.2022 Patentblatt 2022/03**

(21) Anmeldenummer: **15158161.8**

(22) Anmeldetag: **09.03.2015**

(51) Internationale Patentklassifikation (IPC):
***C08K 3/32*** *(2006.01)* ***C08K 5/5313*** *(2006.01)*
*C08L 67/02 (2006.01)*

(52) Gemeinsame Patentklassifikation (CPC):
(C-Sets verfügbar)
**C08K 3/30; C08K 3/32; C08K 5/34924;**
**C08K 5/5313; C08K 9/06;** C08K 2003/3045;
C08K 2003/321 (Forts.)

(54) **THERMOPLASTISCHE FORMMASSEN**

THERMOPLASTIC MOULDING MATTERS

MATIÈRES À MOULER THERMOPLASTIQUES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**22.02.2017 Patentblatt 2017/08**

(73) Patentinhaber: **LANXESS Deutschland GmbH**
**50569 Köln (DE)**

(72) Erfinder:
- **Endtner, Jochen**
  **50679 Köln (DE)**
- **Wambach, Wolfgang**
  **51065 Köln (DE)**
- **Bienmüller, Matthias**
  **47803 Krefeld (DE)**

(56) Entgegenhaltungen:
**DE-T1- 10 196 299 DE-T5-112006 001 824**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

(52) Gemeinsame Patentklassifikation (CPC): (Forts.)

C-Sets
**C08K 3/30, C08L 67/02;**
**C08K 3/32, C08L 67/02;**
**C08K 5/34924, C08L 67/02;**
**C08K 5/5313, C08L 67/02;**
**C08K 9/06, C08L 67/02**

## Beschreibung

Die Erfindung betrifft Zusammensetzungen sowie daraus herzustellende thermoplastische Formmassen und darauf wiederum basierende Erzeugnisse mit wenigstens einem Polyalkylentherephthalat oder Polycycloalkylenterephthalat, wenigstens einem organischen Phosphinsäuresalz und/oder wenigstens einem organischen Diphosphinsäuresalze und wenigstens einem anorganischen Phosphatsalz.

## Stand der Technik

Aus WO 2012/139990 A1 sind kriechstromfeste, flammhemmende, verstärkte, thermoplastische Formmassen auf Basis von Polyalkylenterephthalaten bekannt, die neben einem Flammschutzmittel aus stickstoffhaltigen oder phosphorhaltigen Verbindungen auch ein Polyolefin aus der Gruppe Polyethylen, Polypropylen und Polypropylen-Copolymeren enthalten. Diese zeichnen sich zwar durch erhöhte Kriechstromfestigkeiten aus, allerdings zu Lasten von mechanischen Eigenschaften wie z.B. der Zugfestigkeit. Die Verwendung von Polyolefinen als Zusatzpolymer beinhaltet zudem das Risiko, dass Abstriche bei den für die Polyalkylenterephthalate typischen Vorteilen wie z.B. einer hohen Oberflächenspannung und einer hohen Farbstabilität bei thermischer Belastung in Kauf genommen werden müssen.

DE 11 2006 001824 T5 offenbart flammenhemmende Harzzusammensetzungen mit verbesserten elektrischen Eigenschaften, umfassend (A) ein Grundharz, (B) ein Halogen enthaltendes Flammschutzmittel, (C) mindestens ein Salz einer organischen oder anorganischen Säure, ausgewählt aus der Gruppe, bestehend aus (C1) einem Salz einer organischen Phosphinsäure und (C2) einem Salz aus einer Oxosäure und einer basischen Stickstoff enthaltenden Verbindung, und(D) ein Mittel, das die elektrischen Eigenschaften verbessert, wobei das Mittel, das die elektrischen Eigenschaften verbessert (D), mindestens einen Bestandteil umfasst, ausgewählt aus der Gruppe, bestehend aus einem Harz vom Olefin-Typ, einem Fluor enthaltenden Harz und einer Metallverbindung mit einem Element der Gruppe 4 des Periodensystems der Elemente.

DE 101 96 299 T1 beschreibt flammhemmende Harzzusammensetzungen, umfassend ein Basisharz und ein flammhemmendes Mittel umfassend (A) ein Calciumhydrogenphosphat und (B) mindestens einen Bestandteil ausgewählt aus (B1) einer Phosphorverbindung, (B2) einer Stickstoff Verbindung, (B3) eine Borverbindung (wie ein Metallborat), (B4) eine Siliziumverbindung (wie ein (Poly)organosiloxan oder Zeolith) und (B5) eine Metallverbindung (wie ein Metallhydroxid oder Metalloxid). Aufgabe der vorliegenden Erfindung war es daher, flammwidrige Polyalkylenterephthalat oder Polycycloalkylenterephthalat basierte thermoplastische Formmassen mit erhöhter Kriechstromfestigkeit bereit zu stellen, die ohne die Verwendung von Polyolefinen auskommen und woraus Erzeugnisse hergestellt werden können, die im Vergleich zu Formmassen ohne verbesserte Kriechstromfestigkeit keinen Verlust bei den mechanischen Eigenschaften, insbesondere der Festigkeit, zeigen und darüber hinaus auch keine Verschlechterung im Brandverhalten zeigen.

## Erfindung

Lösung der Aufgabe und Gegenstand der Erfindung sind Zusammensetzungen sowie daraus herzustellende thermoplastische Formmassen enthaltend

A) wenigstens ein Polyalkylenterephthalat oder Polycycloalkylenterephthalat,

B) wenigstens ein organisches Phosphinsäuresalz der Formel (I) und/oder wenigstens ein organisches Diphosphinsäuresalz der Formel (II) und/oder deren Polymere,

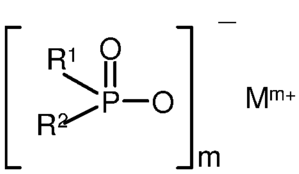 (I) 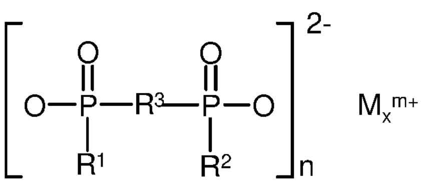 (II)

worin

$R^1$, $R^2$ gleich oder verschieden sind und für ein lineares oder verzweigtes $C_1$-$C_6$-Alkyl, und/oder für $C_6$-$C_{14}$-Aryl stehen,

$R^3$ für lineares oder verzweigtes $C_1$-$C_{10}$-Alkylen, $C_6$-$C_{10}$-Arylen oder für $C_1$-$C_6$-Alkyl-$C_6$-$C_{10}$-arylen oder

$C_6$-$C_{10}$-Aryl-$C_1$-$C_6$-alkylen steht,

M für Aluminium, Zink oder Titan steht,

m für eine ganze Zahl im Bereich von 1 bis 4 steht;

n für eine ganze Zahl im Bereich von 1 bis 3 steht, und

x für 1 und 2 steht,

wobei n, x und m in Formel (II) gleichzeitig nur solche ganzen Zahlen annehmen können, dass das Diphosphinsäuresalz der Formel (II) als Ganzes ungeladen ist, und

C) wenigstens ein anorganisches Phosphatsalz aus der Gruppe der Metallhydrogenphosphate, der Metalldihydrogenphosphate, der Metalldihydrogenpyrophosphate und/oder der Metallpyrophosphate, wobei Metall für Magnesium steht.

Überraschenderweise zeigen auf den erfindungsgemäßen Zusammensetzungen basierende Erzeugnisse eine gegenüber dem Stand der Technik auch ohne Verwendung von Polyolefinen eine zumindest gleichwertig hohe Kriechstromfestigkeit, aber keinen Verlust bei den mechanischen Kennwerten der Biegefestigkeit, Randfaserdehnung oder der Schlagzähigkeit nach IZOD.

Zur Klarstellung sei angemerkt, dass im Rahmen dieser Erfindung alle nachfolgend aufgeführten, allgemeinen oder in Vorzugsbereichen genannten Definitionen und Parameter in beliebigen Kombinationen umfasst sind.

Ferner sei zur Klarstellung angemerkt, dass die Biegefestigkeit in der technischen Mechanik ein Wert für eine Biegespannung in einem auf Biegung beanspruchten Bauteil ist, bei dessen Überschreiten das Versagen durch Bruch des Bauteils eintritt. Sie beschreibt den Widerstand eines Werkstückes, welcher seiner Durchbiegung oder seinem Bruch entgegengesetzt wird. Im Kurzeit-Biegeversuch nach ISO 178 werden balkenförmige Probekörper, hier mit den Abmessungen 80 mm • 10 mm • 4,0 mm an den Enden auf zwei Aufleger gelegt und in der Mitte mit einem Biegestempel belastet (Bodo Carlowitz: Tabellarische Übersicht über die Prüfung von Kunststoffen, 6. Auflage, Giesel-Verlag für Publizität, 1992, S. 16-17).

Gemäß "http://de.wikipedia.org/wiki/Biegeversuch" wird das Biegemodul im 3-Punkt-Biegeversuch ermittelt, wobei eine Prüfprobe auf zwei Auflagen positioniert und in der Mitte mit einem Prüfstempel belastet wird. Der Biegemodul berechnet sich gemäß Formel (III) bei einer Flachprobe dann wie folgt:

$$E = l_v^3(X_H - X_L) / 4\ D_L b a^3 \qquad \text{(III)}$$

mit $E$ = Biegemodul in kN/mm$^2$; $l_v$ = Stützweite in mm; $X_H$ = Ende der Biegemodulermittlung in kN; $X_L$ = Beginn der Biegemodulermittlung in kN; $D_L$ = Durchbiegung in mm zwischen $X_H$ und $X_L$; $b$ = Probenbreite in mm; $a$ = Probendicke in mm.

Die Schlagzähigkeit beschreibt die Fähigkeit eines Werkstoffes, Stoßenergie und Schlagenergie zu absorbieren, ohne zu brechen. Die Schlagzähigkeit wird berechnet als das Verhältnis aus Schlagarbeit und Probekörperquerschnitt (Maßeinheit kJ/m$^2$).

Durch verschiedene Arten des Kerbschlagbiegeversuchs (Charpy, Izod) kann die Schlagzähigkeit bestimmt werden. Im Unterschied zur Kerbschlagzähigkeit wird bei der Schlagzähigkeit der Probekörper nicht eingekerbt. Die Izod Schlagzähigkeit wurde im Rahmen der vorliegenden Erfindung nach ISO 180-1U an spritzfrischen Probekörpern der Abmessung 80 mm • 10 mm • 4 mm bestimmt.

Die Kriechstromfestigkeit kennzeichnet die Isolationsfestigkeit der Oberfläche (Kriechstrecke) von Isolierstoffen, insbesondere unter Einwirkung von Feuchtigkeit und Verunreinigungen. Sie definiert den maximalen Kriechstrom, der sich unter genormten Prüfbedingungen (vorgegebene Spannung, Leitschichtmaterial) in einer definierten Prüfanordnung (Elektrodenabstand, Elektrodenform) einstellen darf. Die Kriechstromfestigkeit wird mit dem CTI-Wert (englisch *Comparative Tracking Index)* angegeben. Der CTI-Wert sagt aus, bis zu welcher Spannung das Basismaterial kein Tracking zeigt, wenn 50 Tropfen genormter Elektrolytlösungen (A oder B, dementsprechend KA- oder KB-Wert) aufgetropft werden. Gemessen wird auf der Oberfläche, wobei alle 30 Sekunden ein Tropfen zwischen zwei Platin-Elektroden fällt. Ausfallkriterium ist ein Kriechstrom von > 0,5 A. Einzelheiten zum Messverfahren des CTI-Werts sind in der IEC 60112 geregelt.

Die Schmelze-Volumenfließrate (engl. MVR = *Melt Volume-flow Rate* oder ehemals und bis heute oft umgangssprachlich als *Melt Volume Rate* oder MVI = *Melt Volume Index* bezeichnet) dient zur Charakterisierung des Fließverhaltens (Formmassenprüfung) eines Thermoplasten bei bestimmten Druck- und Temperaturbedingungen. Die Bestimmung der Schmelze-Massefließrate erfolgt analog der Schmelze-Volumenfließrate und unterscheidet sich im Messergebnis durch die Schmelzedichte. Der MVR ist ein Maß für die Viskosität einer Kunststoffschmelze. Daraus lässt sich auf den Polymerisationsgrad, also die mittlere Anzahl von Monomereinheiten in einem Molekül, schließen.

Der MVR nach ISO 1133 wird im Rahmen der vorliegenden Erfindung mittels eines Kapillarrheometers ermittelt, wobei das Material (Granulat oder Pulver) in einem beheizbaren Zylinder aufgeschmolzen und unter einem durch die Auflagelast entstehenden Druck durch eine definierte Düse (Kapillare) gedrückt wird. Ermittelt wird das austretende Volumen bzw. Masse der Polymerschmelze (des sogenannten Extrudats) als Funktion der Zeit. Ein wesentlicher Vorteil der Schmelze-Volumenfließrate liegt in der einfachen Messung des Kolbenwegs bei bekanntem Kolbendurchmesser zur Bestimmung des ausgetretenen Schmelzevolumens. Es gilt: MVR = Volumen/10min. Die Einheit für den MVR ist $cm^3/10min$.

"Alkyl" bezeichnet im Rahmen der vorliegenden Erfindung eine geradkettige oder verzweigte gesättigte Kohlenwasserstoffgruppe. In einigen Ausführungsformen wird eine Alkylgruppe mit 1 bis 6 Kohlenstoffatomen eingesetzt. Diese kann als eine "Niederalkylgruppe" bezeichnet werden. Bevorzugte Alkylgruppen sind Methyl (Me), Ethyl (Et), Propyl, insbesondere n-Propyl und iso-Propyl, Butyl, insbesondere n-Butyl, iso-Butyl, sec-Butyl, tert-Butyl, Pentyl-Gruppen, insbesondere n-Pentyl, iso-Pentyl, neo-Pentyl, Hexylgruppen und dergleichen. Entsprechendes gilt für den Begriff Polyalkylen.

"Aryl" bezeichnet im Rahmen der vorliegenden Erfindung ein monocyclisches aromatisches Kohlenwasserstoff-Ringsystem oder ein polycyclisches Ringsystem, in dem zwei oder mehrere aromatische Kohlenwasserstoff-Ringe kondensiert sind, oder wenigstens einen aromatischen monocyclischen Kohlenwasserstoffring, der mit einem oder mehreren Cycloalkyl- und/oder Cycloheteroalkylringen fusioniert ist. In erfindungsgemäßen Ausführungsformen ist Aryl oder Arylen eine Arylgruppe mit 6 bis 14 Kohlenstoffatomen. Bevorzugte Arylgruppen mit einem aromatischen carbocyclischen Ringsystem sind Phenyl, 1-Naphthyl (bicyclisch), 2-Naphthyl (bicyclisch), Anthracenyl (tricyclisch), Phenanthrenyl (tricyclisch), Pentacenyl (fünfcyclisch) und ähnliche Gruppen. Andere bevorzugte Arylgruppen sind Benzodioxanyl, Benzodioxolyl, Chromanyl, Indolinyl-Gruppen und dergleichen. In einigen Ausführungsformen können Arylgruppen, wie hierin beschrieben, substituiert sein. In einigen Ausführungsformen kann eine Arylgruppe einen oder mehrere Substituenten aufweisen.

"Alkylaryl" im Sinne der vorliegenden Erfindung bedeutet eine Alkyl-Aryl-Gruppe, wobei die Alkylaryl-Gruppe kovalent an die definierte chemische Struktur durch die Alkylgruppe gebunden ist. Eine erfindungsgemäß bevorzugte Alkylarylgruppe ist die Benzyl-Gruppe ($-CH_2-C_6H_5$). Alkylarylgruppen gemäß der vorliegenden Erfindung können wahlweise substituiert sein, das heißt, entweder die Arylgruppe und/oder die Alkyl-Gruppe kann substituiert sein. Im Gegensatz dazu bedeutet "Arylalkyl" im Sinne der vorliegenden Erfindung eine Aryl-Alkyl-Gruppe, wobei die Arylalkyl-Gruppe kovalent an die definierte chemische Struktur durch die Arylgruppe gebunden ist.

## Komponente A)

Die erfindungsgemäß als Komponente A) einzusetzenden Polyalkylenterephthalate oder Polycycloalkylenterephthalate können nach verschiedenen Verfahren hergestellt werden, aus unterschiedlichen Bausteinen synthetisiert werden und im speziellen Anwendungsfall allein oder in Kombination mit Verarbeitungshilfsmitteln, Stabilisatoren, polymeren Legierungspartnern (z.B. Elastomeren) oder auch Verstärkungsmaterialien (wie z.B. mineralischen Füllstoffen oder Glasfasern) und gegebenenfalls weiteren Additiven, zu Werkstoffen mit speziell eingestellten Eigenschaftskombinationen ausgerüstet werden. Geeignet sind auch Blends mit Anteilen von anderen Polymeren, wobei gegebenenfalls ein oder mehrere Kompatibilisatoren eingesetzt werden können. Die Eigenschaften der Polymere können nach Bedarf durch Zusatz von Elastomeren verbessert werden.

Bevorzugte Polyalkylenterephthalate oder Polycycloalkylenterephthalate lassen sich aus Terephthalsäure (oder ihren reaktionsfähigen Derivaten) und aliphatischen oder cycloaliphatischen Diolen mit 2 bis 10 C-Atomen nach bekannten Methoden herstellen (Kunststoff-Handbuch, Bd. VIII, S. 695 ff, Karl Hanser Verlag, München 1973).

Bevorzugte Polyalkylenterephthalate oder Polycycloalkylenterephthalate enthalten mindestens 80 Mol-%, vorzugsweise mindestens 90 Mol-%, bezogen auf die Dicarbonsäure, Terephthalsäurereste und mindestens 80 Mol-%, vorzugsweise mindestens 90 Mol-%, bezogen auf die Diolkomponente, 1,4-Cyclohexandimethanol-und/oder Ethylenglykol- und/oder Propandiol-1,3- (im Falle von Polypropylenterephthalat) und/oder Butandiol-1,4-reste.

Bevorzugte Polyalkylenterephthalate oder Polycycloalkylenterephthalate können neben Terephthalsäureresten bis zu 20 Mol-% Reste anderer aromatischer Dicarbonsäuren mit 8 bis 14 C-Atomen oder Reste aliphatischer Dicarbonsäuren mit 4 bis 12 C-Atomen enthalten, insbesondere Reste von Phthalsäure, Isophthalsäure, Naphthalin-2,6-dicarbonsäure, 4,4'-Diphenyldicarbonsäure, Bernsteinsäure, Adipinsäure, Sebacinsäure, Azelainsäure, Cyclohexandiessigsäure, Cyclohexandicarbonsäure.

Bevorzugte Polyalkylenterephthalate oder Polycycloalkylenterephthalate können neben 1,4-Cyclohexandimethanol bzw. Ethylenglykol bzw. 1,3-Propandiol bzw. 1,4-Butandiol-1,4 bis zu 20 Mol-% andere aliphatische Diole mit 3

bis 12 C-Atomen oder bis zu 20 Mol -% cycloaliphatische Diole mit 6 bis 21 C-Atomen enthalten, bevorzugt Reste von Propandiol-1,3, 2-Ethylpropandiol-1,3, Neopentylglykol, Pentan-diol-1,5, Hexandiol-1.6, 3-Methylpentandiol-2,4, 2-Methylpentandiol-2,4, 2,2,4-Trimethylpentandiol-1,3, 2,2,4-Trimethylpentandiol-1,5, 2-Ethylhexandiol-1,3, 2,2-Diethylpropandiol-1,3, Hexandiol-2,5, I,4-Di-(ß-hydroxyethoxy)-benzol, 2,2-Bis-(4-hydroxycyclohexyl)-propan, 2,4-Dihydroxy-1,1,3,3-tetramethyl-cyclobutan, 2,2-bis-(3-ß-hydroxyethoxyphenyl)-propan und 2,2-bis-(4-hydroxypropoxyphenyl)-propan.

Besonders bevorzugt sind Polyalkylenterephthalate oder Polycycloalkylenterephthalate, die allein aus Terephthalsäure und deren reaktionsfähigen Derivaten, insbesondere deren Dialkylestern, und 1,4-Cyclohexandimethanol und/oder Ethylenglykol und/oder 1,3-Propandiol und/oder 1,4-Butandiol hergestellt werden, insbesondere bevorzugt Poly-1,4-cyclohexandimethanolterephthalat, Polyethylenterephthalat und Polybutylenterephthalat und Mischungen derselben.

Bevorzugte Polyalkylenterephthalate oder Polycycloalkylenterephthalate sind auch Copolyester, die aus mindestens zwei der obengenannten Säurekomponenten und/oder aus mindestens zwei der obengenannten Alkoholkomponenten hergestellt werden. Besonders bevorzugte Copolyester sind Poly-(ethylenglykol/butandiol-1,4)-terephthalate.

Die Polyalkylenterephthalate oder Polycycloalkylenterephthalate besitzen im allgemeinen eine intrinsische Viskosität im Bereich von 30 bis 150 $cm^3/g$, vorzugsweise im Bereich von 40 bis 130 $cm^3/g$, besonders bevorzugt im Bereich von 50 bis 100 $cm^3/g$ jeweils gemessen in Phenol/o-Dichlorbenzol (1:1 Gew.-Teile) bei 25°C. Die intrinsische Viskosität IV, auch als Staudinger-Index oder Grenzviskosität bezeichnet, ist nach der Mark-Houwink-Gleichung proportional zur mittleren Molekülmasse und ist die Extrapolation der Viskositätszahl VN für den Fall verschwindender Polymerkonzentrationen. Sie kann aus Messreihen oder durch die Verwendung geeigneter Näherungsverfahren (z.B. Billmeyer) abgeschätzt werden. Die VN [ml/g] erhält man aus der Messung der Lösungsviskosität im Kapillar-Viskosimeter, beispielsweise Ubbelohde-Viskosimeter. Die Lösungsviskosität ist ein Maß für das mittlere Molekulargewicht eines Kunststoffs. Die Bestimmung erfolgt an gelöstem Polymer, wobei unterschiedliche Lösungsmittel (Ameisensäure, m-Kresol, Tetrachlorethan, Phenol, 1,2-Dichlorbenzol, etc) und Konzentrationen zum Einsatz kommen. Durch die Viskositätszahl VN ist eine Kontrolle der Verarbeitungs- und Gebrauchseigenschaften von Kunststoffen möglich. Eine thermische Beanspruchung des Polymers, Alterungsvorgänge oder das Einwirken von Chemikalien, Bewitterung und Licht können durch vergleichende Messungen untersucht werden. Das Verfahren ist für gängige Kunststoffe genormt, im Rahmen der vorliegenden Erfindung gemäß DIN ISO 1628-5 für Polyester. Siehe hierzu auch: http://de.wikipedia.org/wiki/Viskosimetrie und "http://de.wikipedia.org/wiki/Mark-Houwink-Gleichung".

Die erfindungsgemäß als Komponente A) einzusetzenden Polyalkylenterephthalate oder Polycycloalkylenterephthalate können auch im Gemisch mit anderen Polyestern und/oder weiteren Polymeren eingesetzt werden.

Den als Komponente A) einzusetzenden Polyalkylenterephthalaten oder Polycycloalkylenterephthalaten können während der Compoundierung übliche Additive, insbesondere Entformungsmittel, in der Schmelze zugemischt werden.

Der Fachmann versteht unter Compoundierung (aus dem Englischen: *Compound* = "Mischung") einen Begriff aus der Kunststofftechnik, welcher mit Kunststoffaufbereitung gleichzusetzen ist und den Veredelungsprozess von Kunststoffen durch Beimischung von Zuschlagstoffen (Füllstoffe, Additive usw.) zur gezielten Optimierung der Eigenschaftsprofile beschreibt. Die Compoundierung erfolgt vorzugsweise in Extrudern, besonders bevorzugt in gleichläufigen Doppelschneckenextrudern, gegenläufigen Doppelschneckenextrudern, Planetwalzenextrudern oder Co-Knetern und umfasst die Verfahrensoperationen Fördern, Aufschmelzen, Dispergieren, Mischen, Entgasen und Druckaufbau.

Als Komponente A) wird bevorzugt wenigstens ein Polyalkylenterephthalat auszuwählen aus Polyethylenterephthalat [CAS Nr. 25038-59-9] oder Polybutylenterephthalat [CAS Nr. 24968-12-5], insbesondere Polybutylenterephthalat (PBT) eingesetzt.

Alternativ wird als Komponente A) bevorzugt Poly-1,4-cyclohexandimethanolterephthalat [CAS Nr.25037-99-4] als Polycycloalkylenterephthalat eingesetzt.

**Komponente B)**

Die als Komponente B) erfindungsgemäß einzusetzenden organischen Phosphinsäuresalze der oben angegebenen Formel (I) und/oder organischen Diphosphinsäuresalze der oben angegebenen Formel (II) und/oder deren Polymere werden im Rahmen der vorliegenden Erfindung auch als Phosphinate bezeichnet.

Bevorzugt steht M in den Formeln (I) oder (II) für Aluminium. Bevorzugt sind $R^1$, $R^2$ in den Formeln (I) und (II) gleich oder verschieden und bedeuten $C_1$-$C_6$-Alkyl, linear oder verzweigt und/oder Phenyl. Besonders bevorzugt sind $R^1$, $R^2$ gleich oder verschieden und bedeuten Methyl, Ethyl, n-Propyl, iso-Propyl, n-Butyl, tert.-Butyl, n-Pentyl und/oder Phenyl.

Bevorzugt bedeutet $R^3$ in Formel (II) Methylen, Ethylen, N-Propylen, iso-Propylen, n-Butylen, tert.-Butylen, n-Pentylen, n-Octylen, n-Dodecylen, Phenylen, Naphthylen, Methylphenylen, Ethylphenylen, tert.-Butylphenylen, Methylnaphthylen, Ethylnaphthylen, tert.-Butylnaphthylen, Phenylmethylen, Phenylethylen, Phenylpropylen oder Phenylbuty-

len. Besonders bevorzugt bedeutet $R^3$ Phenylen oder Naphthylen. Geeignete Phosphinate sind in der WO-A 97/39053 beschrieben, deren Inhalt in Bezug auf die Phosphinate von der vorliegenden Anmeldung mit umfasst wird. Besonders bevorzugte Phosphinate im Sinne der vorliegenden Erfindung sind Aluminium- und Zinksalze des Dimethylphosphinats, des Ethylmethylphosphinats, des Diethylphosphinats und des Methyl-n-propylphosphinats sowie deren Mischungen.

Bevorzugt steht m in Formel (I) für 2 und 3, besonders bevorzugt für 3.

Bevorzugt steht n in Formel (II) für 1 und 3, besonders bevorzugt für 3.

Bevorzugt steht x in Formel (II) für 1 und 2, besonders bevorzugt für 2.

Ganz besonders bevorzugt wird als Komponente B) Aluminium-tris(diethylphosphinat) [CAS Nr. 225789-38-8] eingesetzt, das z.B. von der Fa. Clariant International Ltd. Muttenz, Schweiz unter dem Handelsnamen Exolit® OP1230 oder Exolit® OP1240 angeboten wird.

**Komponente C)**

Als Komponente C) wird wenigstens ein anorganisches Phosphatsalz aus der Gruppe der Metallhydrogenphosphate, der Metalldihydrogenphosphate, der Metalldihydrogenpyrophosphate und/oder der Metallpyrophosphate eingesetzt, wobei Metall in Komponente C) für Magnesium steht.

Bei dem als Komponente C) erfindungsgemäß einzusetzendem anorganischen Phosphatsalz sind die entsprechenden Hydrate mit umfasst.

Vorzugsweise werden als Komponente C) solche anorganischen Phosphatsalze eingesetzt, die einen pH-Wert im Bereich von 2 bis 6 aufweisen, besonders bevorzugt im Bereich von 2 bis 4 aufweisen, wobei sich die Angaben des pH-Wertes hier auf wässriges Medium bei 20°C und einer Konzentration von 1g pro Liter beziehen.

Aus der Gruppe der Metalldihydrogenpyrophosphate und der Metallpyrophosphate wird Magnesiumpyrophosphat [CAS-Nr. 13446-24-7] eingesetzt.

Aus der Gruppe der Metallhydrogenphosphate wirdMagnesiumhydrogenphosphat [CAS-Nr. 7757-86-0] eingesetzt.

Aus der insbesondere als Komponente C) bevorzugt einzusetzenden Gruppe der Metalldihydrogenphosphate werden bevorzugt Magnesium-bis(dihydrogenphosphate) [CAS Nr.13092-66-5]eingesetzt.Die Verbindungen der Komponente C) können einzeln oder als Mischung eingesetzt werden.

Vorzugsweise enthalten die erfindungsgemäßen Zusammensetzungen und die daraus herzustellenden Formmassen die Komponente A) zu 68 bis 93,99 Gew.-%, die Komponente B) zu 6 bis 30 Gew.-% und die Komponente C) zu 0,01 bis 2 Gew.-%, wobei die Summe aller Gewichtsprozente stets 100 ergibt.

Besonders bevorzugt enthalten die erfindungsgemäßen Zusammensetzungen und die daraus herzustellenden Formmassen die Komponenten A) im Bereich von von 79 bis 89,9 Gew.-%, die Komponente B) im Bereich von 10 bis 20 Gew.-% und die Komponente C) im Bereich von 0,1 bis 1 Gew.-%, wobei die Summe aller Gewichtsprozente stets 100 ergibt.

Die Zubereitung erfindungsgemäßer Formmassen für eine weitere Nutzung erfolgt durch Mischen der erfindungsgemäßen Zusammensetzungen in wenigstens einem Mischwerkzeug, vorzugsweise Compounder. Hierdurch werden als Zwischenprodukte, auf den erfindungsgemäßen Zusammensetzungen basierende, Formmassen erhalten. Diese Formmassen - auch als thermoplastische Formmassen bezeichnet - können entweder ausschließlich aus den Komponenten A), B) und C) bestehen, oder aber zusätzlich zu den Komponenten A), B) und C) noch weitere Komponenten enthalten. In diesem Fall sind die Komponenten A), B) und C) im Rahmen der angegebenen Mengenbereiche so zu variieren, dass die Summe aller Gewichtsprozente stets 100 ergibt.

Im Falle thermoplastischer Formmassen und daraus herzustellender Erzeugnisse liegt der Anteil der erfindungsgemäßen Zusammensetzungen in diesen bevorzugt im Bereich von 40 bis 100 Gew.-% vor, wobei es sich bei den übrigen Bestandteilen um Zusatzstoffe handelt, die der Fachmann entsprechend dem späteren Einsatz der Erzeugnisse auswählt, bevorzugt aus wenigstens einer der im Folgenden definierten Komponenten D) bis F).

**Komponente D)**

In einer bevorzugten Ausführungsform wird zusätzlich zu den Komponenten A), B) und C) noch Komponente D) wenigstens ein stickstoffhaltiges Flammschutzmittel eingesetzt, vorzugsweise im Bereich von 0,1 bis 15 Gew.-%, besonders bevorzugt im Bereich von 3 bis 10 Gew.-%, wobei wenigstens eine der Komponenten A), B) oder C) im Rahmen der angegebenen Mengenbereiche so zu variieren ist, dass die Summe aller Gewichtsprozente der Komponenten A), B), C) und D) bezogen auf die Formmasse stets 100 ergibt.

Bevorzugt sind stickstoffhaltige Flammschutzmittel enthaltend Melamin und/oder Kondensationsprodukte des Melamins, insbesondere Melem [CAS Nr. 1502-47-2], Melam [CAS-Nr. 3576-88-3] und Melon [CAS-Nr. 32518-77-7]. Unter den stickstoffhaltigen Flammschutzmitteln enthaltend Melamin sind Umsetzungsprodukte des Melamins mit Säuren besonders bevorzugt, wobei Melamincyanurat, Melaminpolyphosphat und/oder Melamin-interkalierte Aluminium-, Zink- oder Magnesium-Salze von kondensierten Phosphaten, wie in WO2012/025362 A1 beschrieben, ganz besonders bevorzugt sind. Insbesondere bevorzugt sind Melamincyanurat, Melaminpolyphosphat, Bis-Melamin-zinkodiphosphat (EP 2 609 173 A1) und/oder Bis-Melamin-alumotriphosphat (EP 2 609 173 A1), wobei Melaminpolyphosphat und/oder Melamincyanurat insbesondere besonders bevorzugt sind. Melaminpolyphosphat [CAS Nr. 218768-84-4] ist in diversen Produktqualitäten kommerziell verfügbar. Beispiele hierfür sind u.a. Melapur® 200/70 der Fa. BASF, Ludwigshafen, Deutschland sowie Budit® 3141 der Fa. Budenheim, Budenheim, Deutschland. Melamincyanurat [CAS Nr. 37640-57-6] ist in diversen Produktqualitäten kommerziell verfügbar. Beispiele hierfür sind u.a. Melapur® MC25 der Fa. BASF, Ludwigshafen, Deutschland.

**Komponente E)**

In einer weiteren bevorzugten Ausführungsform enthalten die Zusammensetzungen bzw. die daraus herzustellenden Formmassen und Erzeugnisse zusätzlich zu den Komponenten A) bis D) oder anstelle von D) noch E) wenigstens einen Füll- oder Verstärkungsstoff, vorzugsweise im Bereich von 0,1 bis 50 Gew.-%, besonders bevorzugt in einem Bereich 3 bis 40 Gew.-%, ganz besonders bevorzugt in einem Bereich von 10 bis 30 Gew.-%, wobei wenigstens eine der Komponenten A), B), C) und D) oder A), B) und C) im Rahmen der angegebenen Mengenbereiche so zu variieren ist, dass die Summe aller Gewichtsprozente der Komponenten A), B), C), D) und E) bzw. A), B), C) und E) bezogen auf die Formmasse stets 100 ergibt.

Bevorzugt wird aber auch eine Mischung aus zwei oder mehreren unterschiedlichen Füll-und/oder Verstärkungsstoffen, insbesondere auf Basis von Glimmer, Silikat, Quarz, insbesondere. Quarzmehl, Titandioxid, Wollastonit, Kaolin, amorphe Kieselsäuren, Magnesiumcarbonat, Kreide, Feldspat, Bariumsulfat, Glasfasern, Glaskugeln, Glasmehl und/oder faserförmige Füllstoffe und/oder Verstärkungsstoffen auf der Basis von Kohlenstofffasern als Komponente E) eingesetzt. Bevorzugt werden mineralische teilchenförmige Füllstoffe auf der Basis von Glimmer, Silikat, Quarz, Wollastonit, Kaolin, amorphe Kieselsäuren, Magnesiumcarbonat, Kreide oder Feldspat eingesetzt. Besonders bevorzugt werden ferner auch nadelförmige mineralische Füllstoffe als Additiv eingesetzt. Unter nadelförmigen mineralischen Verstärkungsstoffen, auch als Füllstoffe bezeichnet, wird erfindungsgemäß ein mineralischer Füllstoff mit stark ausgeprägtem nadelförmigen Charakter verstanden. Bevorzugt weist das Mineral ein Länge : Durchmesser - Verhältnis im Bereich von 2:1 bis 35:1, besonders bevorzugt im Bereich von 3:1 bis 19:1, am meisten bevorzugt im Bereich von 4:1 bis 12:1 auf. Die mittlere Teilchengröße d50 der erfindungsgemäß einzusetzenden nadelförmigen Mineralien liegt bevorzugt bei kleiner 20 $\mu$m, besonders bevorzugt bei kleiner 15 $\mu$m, insbesondere bevorzugt bei kleiner 10 $\mu$m bestimmt mit einem CILAS GRANULOMETER in Analogie zur ISO 13320:2009 mittels Laserbeugung.

Alle als Komponente E) einzusetzenden Füll- und/oder Verstärkungsstoffe können bedingt durch die Verarbeitung zur Formmasse bzw. zu einem Erzeugnis in diesen einen kleineren d97- bzw. d50-Wert aufweisen, als die ursprünglich eingesetzten Füll- bzw. Verstärkungsstoffe bzw. Glasfasern.

Bezüglich der d50 und d97-Werte in dieser Anmeldung, ihrer Bestimmung und ihrer Bedeutung sei auf Chemie Ingenieur Technik (72) S. 273-276, 3/2000, Wiley-VCH Verlags GmbH, Weinheim, 2000 verwiesen, wonach der

d50-Wert diejenige Partikelgröße ist, unterhalb derer 50 % der Partikelmenge liegen (Medianwert) und der

d97-Wert diejenige Partikelgröße ist, unterhalb derer 97 % der Partikelmenge liegen.

Die Angaben der Teilchengrößenverteilung bzw. der Teilchengrößen beziehen sich im Rahmen der vorliegenden Erfindung auf sogenannte oberflächenbasierte Teilchengrößen, jeweils vor Einarbeitung in die thermoplastische Formmasse. Die Teilchengrößenbestimmung erfolgt durch Laserdiffraktometrie, siehe C.M. Keck, Moderne Pharmazeutische Technologie 2009, Freie Universität Berlin, Kapitel 3.1. oder QUANTACHROME PARTIKELWELT NO 6, Juni 2007, Seiten 1 bis 16. Die zugrunde liegende Norm ist ISO 13317-3.

Die Füll- und Verstärkungsstoffe können einzeln oder als Mischung aus zwei oder mehr unterschiedlichen Füllstoffen und/oder Verstärkungsstoffen eingesetzt werden.

Der als Komponente E) einzusetzende Füll- und/oder Verstärkungsstoff kann in einer bevorzugten Ausführungsform oberflächenmodifiziert sein, besonders bevorzugt mit einem Haftvermittler bzw. Haftvermittlersystem, insbesondere bevorzugt auf Epoxidbasis. Die Vorbehandlung ist jedoch nicht unbedingt erforderlich.

In einer besonders bevorzugten Ausführungsform werden als Komponente E) Glasfasern eingesetzt. Gemäß "http://de.wikipedia.org/wiki/Faser-Kunststoff-Verbund" unterscheidet man geschnittene Fasern, auch als Kurzfasern bezeichnet, mit einer Länge im Bereich von 0,1 bis 1 mm, Langfasern mit einer Länge im Bereich von 1 bis 50 mm und Endlosfasern mit einer Länge L > 50 mm. Kurzfasern werden in der Spritzgusstechnik eingesetzt und können direkt mit einem Extruder verarbeitet werden. Langfasern können ebenfalls noch in Extrudern verarbeitet werden. Sie finden im großen Umfang Einsatz beim Faserspritzen. Langfasern werden häufig Duroplasten als Füllstoff zugemischt. Endlosfasern werden als Rovings oder Gewebe in faserverstärkten Kunststoffen eingesetzt. Erzeugnisse mit Endlosfasern

erzielen die höchsten Steifigkeits- und Festigkeitswerte. Des Weiteren werden gemahlene Glasfasern angeboten, deren Länge nach der Vermahlung typischerweise im Bereich von 70 bis 200 μm liegt.

Erfindungsgemäß bevorzugt werden als Komponente E) geschnittene Langglasfasern mit einer Ausgangslänge im Bereich von 1 bis 50 mm, besonders bevorzugt im Bereich von 1 bis 10 mm, ganz besonders bevorzugt im Bereich von 2 bis 7 mm eingesetzt. Die als Komponente E) bevorzugt einzusetzenden Glasfasern können bedingt durch die Verarbeitung zur Formmasse oder zum Erzeugnis in der Formmasse oder im Erzeugnis einen kleineren d97- bzw. d50-Wert aufweisen, als die ursprünglich eingesetzten Glasfasern. So liegt der arithmetische Mittelwert der Glasfaserlänge nach der Verarbeitung häufig nur noch im Bereich von 150 μm und 300 μm.

Die Ermittlung der Glasfaserlänge und Glasfaserlängenverteilung erfolgt im Rahmen der vorliegenden Erfindung im Falle verarbeiteter Glasfasern in Analogie zur ISO 22314, welche zunächst eine Veraschung der Proben bei 625 °C vorsieht. Anschließend wird die Asche auf einen mit demineralisiertem Wasser bedeckten Objektträger in einer geeigneten Kristallisierschale gegeben und die Asche ohne Wirkung von mechanischen Kräften im Ultraschallbad verteilt. Der nächste Schritt sieht die Trocknung im Ofen bei 130 °C vor und anschließend erfolgt mit Hilfe von lichtmikroskopischen Aufnahmen die Ermittlung der Glasfaserlänge. Dazu werden von drei Aufnahmen mindestens 100 Glasfasern ausgemessen, so dass insgesamt 300 Glasfasern zur Ermittlung der Länge herangezogen werden. Die Glasfaserlänge kann dabei entweder als arithmetischer Mittelwert $l_n$ nach Gleichung

$$l_n = \frac{1}{n} \cdot \sum_{i}^{n} l_i$$

mit $l_i$ = Länge der iten Faser und n = Anzahl der gemessenen Fasern berechnet und in geeigneter Weise als Histogramm dargestellt oder bei einer angenommenen Normalverteilung der gemessenen Glasfaserlängen / mit Hilfe der Gauß-Funktion nach Gleichung

$$f(l) = \frac{1}{\sqrt{2\pi} \cdot \sigma} \cdot e^{-\frac{1}{2}\left(\frac{l-l_c}{\sigma}\right)^2}$$

bestimmt werden. Dabei sind $l_c$ und $\sigma$ spezielle Kennwerte der Normalverteilung; $l_c$ ist der mittlere Wert und $\sigma$ die Standardabweichung (siehe: M.Schoßig, Schädigungsmechanismen in faserverstärkten Kunststoffen, 1, 2011, Vieweg und Teubner Verlag, Seite 35, ISBN 978-3-8348-1483-8). Nicht in eine Kunststoffmatrix eingebundene Glasfasern werden hinsichtlich ihrer Längen gemäß obiger Methoden jedoch ohne die Aufbereitung durch Veraschung und Abtrennung von der Asche analysiert.

Die erfindungsgemäß bevorzugt als Komponente E) einzusetzenden Glasfasern [CAS Nr. 65997-17-3)] haben bevorzugt einen Faserdurchmesser im Bereich von 7 bis 18 μm, besonders bevorzugt im Bereich von 9 bis 15 μm, der durch wenigstens eine dem Fachmann zur Verfügung stehende Möglichkeit zu ermitteln ist, insbesondere zu ermitteln durch μ-Röntgen-Computertomographie in Analogie zu "Quantitative Messung von Faserlängen und -verteilung in faserverstärkten Kunststoffteilen mittels μ-Röntgen-Computertomographie", J.KASTNER, et al. DGZfP-Jahrestagung 2007 - Vortrag 47. Die als Komponente E) vorzugsweise einzusetzenden Glasfasern werden bevorzugt als Endlosfasern oder als geschnittene oder gemahlene Glasfasern zugesetzt.

Die als Komponente E) einzusetzenden Füll- und/oder Verstärkungsstoffe, insbesondere Glasfasern, werden bevorzugt mit einem geeigneten Schlichtesystem und einem Haftvermittler bzw. Haftvermittlersystem, besonders bevorzugt auf Silanbasis, ausgerüstet.

Ganz besonders bevorzugte Haftvermittler auf Silanbasis für die Vorbehandlung sind Silanverbindungen der allgemeinen Formel (IV)

$$(X\text{-}(CH_2)_q)_k\text{-}Si\text{-}(O\text{-}C_rH_{2r+1})_{4-k} \qquad (IV)$$

in der die Substituenten folgende Bedeutung haben:

X: $NH_2$-, HO-,

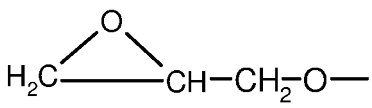

q: eine ganze Zahl von 2 bis 10, bevorzugt 3 bis 4,

r: eine ganze Zahl von 1 bis 5, bevorzugt 1 bis 2,

k: eine ganze Zahl von 1 bis 3, bevorzugt 1.

Insbesondere bevorzugte Haftvermittler sind Silanverbindungen aus der Gruppe Aminopropyltrimethoxysilan, Aminobutyltrimethoxysilan, Aminopropyltriethoxysilan, Aminobutyltriethoxysilan sowie die entsprechenden Silane, welche als Substituent X eine Glycidylgruppe enthalten.

Für die Ausrüstung der Glasfasern werden die Silanverbindungen bevorzugt in Mengen im Bereich von 0,05 bis 2 Gew.-%, besonders bevorzugt im Bereich von 0,25 bis 1,5 Gew.-% und insbesondere im Bereich von 0,5 bis 1 Gew.-% bezogen auf den Füll- bzw.

Verstärkungsstoff, insbesondere die Glasfasern, zur Oberflächenbeschichtung eingesetzt.

**Komponente F)**

In einer weiteren bevorzugten Ausführungsform enthalten die Zusammensetzungen bzw. darauf basierende Formmassen und Erzeugnisse zusätzlich zu den Komponenten A) bis E) oder anstelle von C) und/oder D) und/oder E) noch F) wenigstens ein **weiteres Additiv** das unterschiedlich zu den Komponenten B), C), D) und E) ist, vorzugsweise im Bereich von 0,01 bis 60 Gew.-%, besonders bevorzugt im Bereich von 0,1 bis 50 Gew.-%, ganz besonders bevorzugt im Bereich von 0,2 bis 25 Gew.-%, jeweils bezogen auf die Gesamtzusammensetzung, wobei die Summe aller Gewichtsprozente der Komponenten A), B), C), D), E), F) oder A), B), D), E), F) oder A), B), C), E), F) oder A), B), C), D), F) oder A), B), E), F) oder A), B), C), F) oder A), B), D), F) oder A), B), E), F) oder A), B), F) bezogen auf die Gesamtzusammensetzung stets 100 ergibt.

Bevorzugte weitere Additive im Sinne der vorliegenden Erfindung sind UV-Stabilistoren, weitere von Komponente D) verschiedene Flammschutzmittel, Thermostabilisatoren, Gleit- und Entformungsmittel, Füll- und Verstärkungsstoffe, Laserabsorber, di- oder mehrfunktionelle verzweigend oder kettenverlängernd wirkende Additive, Gammastrahlenstabilisatoren, Hydrolysestabilisatoren, Antistatika, Emulgatoren, Weichmacher, Verarbeitungshilfsmittel, Fließhilfsmittel, Elastomermodifikatoren und Farbmittel. Die Additive können jeweils alleine oder in Mischung bzw. in Form von Masterbatchen eingesetzt werden.

Als **Gleit- und Entformungsmittel** werden bevorzugt solche ausgewählt aus der Reihe der langkettigen Fettsäuren, der Salze langkettiger Fettsäuren, der Esterderivate langkettiger Fettsäuren sowie Montanwachse.

Bevorzugte langkettige Fettsäuren sind Stearinsäure oder Behensäure. Bevorzugte Salze der langkettigen Fettsäuren sind Ca- oder Zn-Stearat. Bevorzugte Esterderivate langkettiger Fettsäuren sind solche auf Basis von Pentaerythritol, insbesondere $C_{16}$-$C_{18}$ Fettsäureester des Pentaerythritols [CAS Nr. 68604-44-4] oder [CAS Nr. 85116-93-4].

Montanwachse im Sinne der vorliegenden Erfindung sind Mischungen aus geradkettigen, gesättigten Carbonsäuren mit Kettenlängen von 28 bis 32 C Atomen. Erfindungsgemäß besonders bevorzugt werden Gleit- und/oder Entformungsmittel aus der Gruppe der Ester gesättigter oder ungesättigter aliphatischer Carbonsäuren mit 8 bis 40 C-Atomen mit aliphatischen gesättigten Alkoholen mit 2 bis 40 C-Atomen sowie Metallsalze gesättigter oder ungesättigter aliphatischer Carbonsäuren mit 8 bis 40 C-Atomen eingesetzt, wobei Pentaerythritoltetrastearat, Calciumstearat [CAS Nr. 1592-23-0] und/oder Ethylenglycoldimontanat, hier insbesondere Licowax® E [CAS-Nr. 74388-22-0] der Fa. Clariant, Muttenz, Basel ganz besonders bevorzugt ist und Pentaerythritoltetrastearat [CAS-Nr. 115-83-3] z.B. erhältlich als Loxiol® P861 der Fa. Emery Oleochemicals GmbH, Düsseldorf, Deutschland insbesondere ganz besonders bevorzugt ist.

Als **UV-Stabilisatoren** werden bevorzugt substituierte Resorcine, Salicylate, Benzotriazole, Triazin-Derivate oder Benzophenone eingesetzt.

Als **Farbmittel** werden bevorzugt organische Pigmente, bevorzugt Phthalocyanine, Chinacridone, Perylene sowie Farbstoffe, bevorzugt Nigrosin oder Anthrachinone, weiterhin anorganische Pigmente, insbesondere Titandioxid und/oder Bariumsulfat, Ultramarinblau, Eisenoxid, Zinksulfid oder Ruß eingesetzt werden.

Für das erfindungsgemäß als Pigment bevorzugt einzusetzende **Titandioxid** kommen Titandioxid-Pigmente in Frage, deren Grundkörper nach dem Sulfat (SP)- oder Chlorid (CP)-Verfahren hergestellt sein können und die Anatas und / oder Rutilstruktur, bevorzugt Rutilstruktur haben. Der Grundkörper muss nicht stabilisiert sein, jedoch ist eine spezielle Stabilisierung bevorzugt: beim CP-Grundkörper durch eine Al- Dotierung von 0,3-3,0 Gew.-% (gerechnet als $Al_2O_3$) und einem Sauerstoffüberschuss in der Gasphase bei der Oxidation des Titantetrachlorids zu Titandioxid von

mindestens 2 %; beim SP-Grundkörper durch eine Dotierung z. B. mit Al, Sb, Nb oder Zn. Besonders bevorzugt ist eine "leichte" Stabilisierung mit Al, bzw. bei höheren Al-Dotierungsmengen eine Kompensation mit Antimon. Bei der Verwendung von Titandioxid als Weißpigment in Farben und Lacken, Kunststoffen usw. ist bekannt, dass durch UV-Absorption erzeugte unerwünschte photokatalytische Reaktionen zur Zersetzung des pigmentierten Materials führen. Dabei absorbieren Titandioxid-Pigmente im nahen ultravioletten Bereich Licht, so dass Elektron-Loch-Paare entstehen, welche hochreaktive Radikale auf der Titandioxid-Oberfläche erzeugen. Die gebildeten Radikale haben in organischen Medien einen Bindemittelabbau zur Folge. Erfindungsgemäß bevorzugt wird zur Erniedrigung der Photoaktivität des Titandioxids dieses anorganisch nachbehandelt, besonders bevorzugt mit Oxiden von Si und/oder Al und/oder Zr und/oder durch den Einsatz von Sn-Verbindungen.

Bevorzugt ist die Oberfläche von pigmentärem Titandioxid mit amorphen Auffällungen von Oxidhydraten der Verbindungen $SiO_2$ und/oder $Al_2O_3$ und/oder Zirkonoxid bedeckt. Die $Al_2O_3$-Hülle erleichtert die Pigmentdispergierung in die Polymermartrix, die $SiO_2$-Hülle erschwert den Ladungsaustausch an der Pigmentoberfläche und verhindert dadurch den Polymerabbau.

Erfindungsgemäß wird das Titandioxid bevorzugt mit hydrophilen und/oder hydrophoben organischen Beschichtungen versehen, insbesondere mit Siloxanen oder Polyalkoholen.

Erfindungsgemäß bevorzugt als Farbmittel der Komponente F) einzusetzendes Titandioxid [CAS Nr. 13463-67-7] weist bevorzugt eine mittlere Teilchengröße d50 im Bereich von 90 nm bis 2000 nm, besonders bevorzugt im Bereich von 200 nm bis 800 nm auf. Die mittlere Teilchengröße d50 ist der aus der Teilchengrößenverteilung ermittelte Wert, zu dem 50 Gew.-% der Teilchen einen äquivalenten Kugeldurchmesser kleiner als diesen d50 Wert aufweisen. Die zugrunde liegende Norm ist ISO 13317-3.

Die Angaben der Teilchengrößenverteilung bzw. der mittleren Teilchengröße beim Titandioxid beziehen sich auf sogenannte oberflächenbasierte Teilchengrößen, jeweils vor Einarbeitung in die thermoplastische Formmasse. Die Teilchengrößenbestimmung erfolgt erfindungsgemäß durch Laserdiffraktometrie, siehe C.M. Keck, Moderne Pharmazeutische Technologie 2009, Freie Universität Berlin, Kapitel 3.1. oder QUANTACHROME PARTIKELWELT NO 6, Juni 2007, Seiten 1 bis 16.

Kommerziell erhältliches Titandioxid sind beispielsweise Kronos® 2230, Kronos® 2233, Kronos® 2225 und Kronos® vlp7000 der Fa. Kronos, Dallas, USA.

Erfindungsgemäß wird das als Pigment bevorzugt einzusetzende Titandioxid bevorzugt im Bereich von 0,1 bis 15 Gew.-%, besonders bevorzugt im Bereich von 0,5 bis 10 Gew.-%, ganz besonders bevorzugt im Bereich von 1 bis 5 Gew.-% eingesetzt.

Sofern nicht bereits als Füllstoff eingesetzt, kann in einer besonders bevorzugten Ausführungsform Bariumsulfat [CAS Nr. 7727-43-7] als Pigment eingesetzt werden. Dieses kann in Form des natürlich vorkommenden Baryts oder in Form von nach bekannten technischen Verfahren synthetisch hergestelltem Bariumsulfat eingesetzt werden, wobei synthetische Varianten bevorzugt sind. Als übliche Herstellmethoden für Bariumsulfat wird in http://de.wikipedia.org/wiki/Bariumsulfat beispielsweise die Fällung von Bariumsulfid oder Bariumchlorid mit Natriumsulfat gelehrt. Die mittlere Teilchengröße [d50-Wert] ist dabei bevorzugt im Bereich von 0,1 bis 50$\mu$m, besonders bevorzugt im Bereich von 0,5 bis 10 $\mu$m und ganz besonders bevorzugt im Bereich von 0,6 bis 2$\mu$m. Das Bariumsulfat kann dabei unbehandelt oder mit anorganischen und/oder organischen Oberflächenbehandlungen ausgerüstet sein. Beispiele für anorganische oder organischen Oberflächenbehandlungen sowie Verfahren für deren Applikation auf die Oberfläche werden beispielsweise in WO2008/023074 A1 gelehrt. Geeignete Bariumsulfate werden z.B. von der Fa. Sachtleben Chemie GmbH, Duisburg, Deutschland unter den Handelsnamen Albasoft® 90, Albasoft® 100 bzw. Blanc fixe F und Blanc Fixe Super F angeboten.

Als Komponente F) einzusetzendes Bariumsulfat wird vorzugsweise im Mengenbereich von 0,1 bis 7 Gew.-%, besonders bevorzugt im Bereich von 0,5 bis 5 Gew.-% angewandt.

Bevorzugt können als Komponente F) **di- oder mehrfunktionelle verzweigend oder kettenverlängernd wirkende Additive,** enthaltend mindestens zwei und höchstens 15 verzweigend oder kettenverlängernd wirkende funktionelle Gruppen pro Molekül, eingesetzt werden. Als verzweigende bzw. kettenverlängende Additive kommen niedermolekulare oder oligomere Verbindungen in Frage, die über mindestens zwei und höchstens 15 verzweigend oder kettenverlängernd wirkende funktionelle Gruppen pro Molekül verfügen, welche mit primären und/oder sekundären Aminogruppen, und/oder Amidgruppen und/oder Carbonsäuregruppen reagieren können. Kettenverlängernd wirkende funktionelle Gruppen sind bevorzugt Isocyanate, Alkohole, blockierte Isocyanate, Epoxide, Maleinsäureanhydrid, Oxazoline, Oxazine, Oxazolone.

Insbesondere bevorzugte di- oder mehrfunktionelle verzweigend oder kettenverlängernd wirkende Additive sind Diepoxide auf Basis Diglycidylether (Bisphenol und Epichlorhydrin), auf Basis von Aminepoxidharz (Anilin und Epichlorhydrin), auf Basis von Diglycidylester (cycloaliphatische Dicarbonsäuren und Epichlorhydrin) einzeln oder in Mischungen sowie 2,2-Bis[p-hydroxy-phenyl]-propan-diglycidylether, Bis-[p-(N-methyl-N-2,3-epoxy-propylamino)-phenyl]-methan sowie epoxidierte Fettsäureester des Glycerins, enthaltend mindestens zwei und höchstens 15 Epoxidgruppen pro Molekül.

Besonders bevorzugte di- oder mehrfunktionelle verzweigend oder kettenverlängernd wirkende Additive sind Glycidylether, ganz besonders bevorzugt Bisphenol A-Diglycidylether [CAS Nr. 98460-24-3] oder epoxidierte Fettsäureester des Glycerins, sowie auch ganz besonders bevorzugt epoxidiertes Sojaöl [CAS Nr. 8013-07-8].

Zur Verzweigung/Kettenverlängerung sind zudem besonders bevorzugt geeignet: 1. Poly- bzw. Oligoglycidyl- oder Poly-(ß-methylglycidyl)-ether erhältlich durch Umsetzung einer Verbindung mit mindestens zwei freien alkoholischen Hydroxygruppen und/oder phenolischen Hydroxygruppen und einem geeignet substituierten Epichlorhydrin unter alkalischen Bedingungen, oder in Anwesenheit eines sauren Katalysators und anschließender Alkalibehandlung.

Poly- bzw. Oligoglycidyl- oder Poly-(ß-methylglycidyl)-ether leiten sich bevorzugt ab von acyclischen Alkoholen, insbesondere Ethylenglykol, Diethylenglykol und höhereren Poly-(oxyethylen)-glykolen, Propan-1,2-diol, Poly-(oxypropylen)-glykolen, Propan-1,3-diol, Butan-1,4-diol, Poly-(oxytetramethylen)-glykolen, Pentan-1,5-diol, Hexan-1,6-diol, Hexan-2,4,6-triol, Glycerin, 1,1,1-Trimethylpropan, Bistrimethylolpropan, Pentaerythrit, Sorbit sowie von Polyepichlorhydrinen.

Sie leiten sich aber auch bevorzugt ab von cycloaliphatischen Alkoholen, insbesondere 1,3- oder 1,4-Dihydroxycyclohexan, Bis-(4-hydroxycyclohexyl)-methan, 2,2-Bis-(4-hydroxycyclohexyl)-propan oder 1,1-Bis-(hydroxymethyl)-cyclohex-3-en oder sie besitzen aromatische Kerne, insbesondere N,N-Bis-(2-hydroxyelhyl)anilin oder p,p'-Bis-(2-hydroxyethyl-amino)-diphenylmethan.

Die Epoxidverbindungen können sich bevorzugt auch von einkernigen Phenolen ableiten, insbesondere von Resorcin oder Hydrochinon, oder sie basieren auf mehrkernigen Phenolen, insbesondere auf Bis-(4-hydroxyphenyl)-methan, 2,2-Bis-(4-hydroxyphenyl)-propan, 2,2-Bis-(3,5-dibrom-4-hydroxyphenyl)-propan, 4,4'-Dihydroxydiphenylsulfon oder auf unter sauren Bedingungen erhaltene Kondensationsprodukte von Phenolen mit Forrnaldehyd, insbesondere Phenol-Novolake.

2. Poly- bzw. Oligo-(N-glycidyl)-Verbindungen ferner erhältlich durch Dehydrochlorierung der Reaktionsprodukte von Epichlorhydrin mit Aminen, die mindestens zwei Aminowasserstoffatome enthalten. Bei diesen Aminen handelt es sich bevorzugt um Anilin, Toluidin, n-Butylamin, Bis-(4-aminophenyl)methan, m-Xylylendiamin oder Bis-(4-methylaminophenyl)-methan, aber auch N,N,O-Triglycidyl-m-aminophenyl oder N,N,O-Triglycidyl-p-aminophenol.

Zu den Poly-(N-glycidyl)-Verbindungen zählen aber auch bevorzugt N,N'-Diglycidylderivate von Cycloalkylenharnstoffen, besonders bevorzugt Ethylenharnstoff oder 1,3-Propylenharnstoff, und N,N'-Diglycidylderivate von Hydantoinen, insbesondere 5,5-Dimethylhydantoin. 3. Poly- bzw. Oligo-(S-glycidyl)-Verbindungen, insbesondere Di-S-glycidylderivate, die sich von Dithiolen, bevorzugt Ethan-1,2-dithiol oder Bis-(4-mercaptomethylphenyl)-ether, ableiten.

4. Epoxidierte Fettsäureester des Glycerins, insbesondere epoxidierte Pflanzenöle. Sie werden durch Epoxidierung der reaktionsfähigen Olefingruppen von Triglyceriden ungesättigter Fettsäuren erhalten. Die Herstellung epoxidierter Fettsäureester des Glycerins kann ausgehend von ungesättigten Fettsäureestern des Glycerins, bevorzugt von Pflanzenölen, und organischen Peroxycarbonsäuren (Prileschajew-Reaktion) erfolgen. Verfahren zur Herstellung von epoxidierten Pflanzenölen sind zum Beispiel in Smith, March, March's Advanced Organic Chemistry (5. Auflage, Wiley-Interscience, New York, 2001) beschrieben. Bevorzugte epoxidierte Fettsäureester des Glycerins sind Pflanzenöle. Erfindungsgemäß besonders bevorzugter epoxidierter Fettsäureester des Glycerins ist epoxidiertes Sojaöl [CAS Nr. 8013-07-8].

Bevorzugt als Komponente F) einzusetzende **Weichmacher** sind Phthalsäuredioctylester, Phthalsäuredibenzylester, Phthalsäurebutylbenzylester, Kohlenwasserstofföle oder N-(n-Butyl)benzolsulfonamid.

Bevorzugt als Komponente F) einzusetzende **Fließhilfsmittel** sind Copolymerisate aus mindestens einem $\alpha$-Olefin mit mindestens einem Methacrylsäurester oder Acrylsäureester eines aliphatischen Alkohols. Besonders bevorzugt sind dabei Copolymerisate, bei denen das $\alpha$-Olefin aus Ethen und/oder Propen aufgebaut ist und der Methacrylsäurester oder Acrylsäureester als Alkoholkomponente lineare oder verzweigte Alkylgruppen mit 6 bis 20 C-Atomen enthält. Ganz besonders bevorzugt ist Acrylsäure-(2-ethyl)-hexylester. Erfindungsgemäß als Fließhilfsmittel geeignete Copolymerisate zeichnen sich neben der Zusammensetzung auch durch das niedrige Molekulargewicht aus. Dementsprechend sind vor allem Copolymerisate bevorzugt, die einen MFI-Wert gemessen bei 190°C und einer Belastung von 2,16 kg von mindestens 100 g / 10 min, bevorzugt von mindestens 150 g / 10 min, besonders bevorzugt von mindestens 300g/10min aufweisen. Der MFI, Melt-Flow-Index, dient zur Charakterisierung des Flusses einer Schmelze eines Thermoplasten und unterliegt den Normen ISO 1133 oder ASTM D 1238. Der MFI bzw. alle Angaben zum MFI im Rahmen der vorliegenden Erfindung beziehen sich bzw. wurden einheitlich nach ISO 1133 bei 190°C und einem Prüfgewicht von 2,16 kg gemessen bzw. bestimmt.

Bevorzugt als Komponente F) einzusetzende **Elastomermodifikatoren** umfassen u.a. ein oder mehrere Pfropfpolymerisate von

F.1 5 bis 95 Gew.-%, vorzugsweise 30 bis 90 Gew.-%, wenigstens eines Vinylmonomeren auf

F.2 95 bis 5 Gew.-%, vorzugsweise 70 bis 10 Gew.-% einer oder mehrerer Pfropfgrundlagen mit Glasübergangstemperaturen < 10°C, vorzugsweise < 0°C, besonders bevorzugt <-20°C.

Die Pfropfgrundlage F.2 hat im allgemeinen eine mittlere Teilchengröße (d50-Wert) im Bereich von 0,05 bis 10 μm, vorzugsweise im Bereich von 0,1 bis 5 μm, besonders bevorzugt im Bereich von 0,2 bis 1 μm.
Monomere F.1 sind vorzugsweise Gemische aus

| | |
|---|---|
| F. 1.1 | 50 bis 99 Gew.-% Vinylaromaten und/oder kernsubstituierten Vinylaromaten, insbesondere Styrol, α-Methylstyrol, p-Methylstyrol, p-Chlorstyrol, und/oder Methacrylsäure-($C_1$-$C_8$)-Alkylester, insbesondere Methylmethacrylat, Ethylmethacrylat und |
| F. 1.2 | 1 bis 50 Gew.-% Vinylcyanide, insbesondere ungesättigte Nitrile wie Acrylnitril und Methacrylnitril, und/oder (Meth)Acrylsäure-($C_1$-$C_8$)-alkylester, insbesondere Methylmethacrylat, Glycidylmethacrylat, n-Butylacrylat, t-Butylacrylat, und/oder Derivate, insbesondere Anhydride und Imide ungesättigter Carbonsäuren, insbesondere Maleinsäureanhydrid oder N-Phenyl-Maleinimid. |

Bevorzugte Monomere F.1.1 sind ausgewählt aus mindestens einem der Monomere Styrol, α-Methylstyrol und Methylmethacrylat, bevorzugte Monomere F.1.2 sind ausgewählt aus mindestens einem der Monomere Acrylnitril, Maleinsäureanhydrid, Glycidylmethacrylat und Methylmethacrylat.
Besonders bevorzugte Monomere sind F.1.1 Styrol und F.1.2 Acrylnitril.
Für die in den Elastomermodifikatoren einzusetzenden Pfropfpolymerisate geeignete Pfropfgrundlagen F.2 sind beispielsweise Dienkautschuke, EPDM-Kautschuke, also solche auf Basis Ethylen/Propylen und gegebenenfalls Dien, ferner Acrylat-, Polyurethan-, Silikon-, Chloropren und Ethylen/Vinylacetat-Kautschuke. EPDM steht für Ethylen-Propylen-Dien-Kautschuk.
Bevorzugte Pfropfgrundlagen F.2 sind Dienkautschuke, insbesondere auf Basis Butadien, Isopren etc. oder Gemische von Dienkautschuken oder Copolymerisate von Dienkautschuken oder deren Gemischen mit weiteren copolymerisierbaren Monomeren, insbesondere gemäß F.1.1 und F.1.2, mit der Maßgabe, dass die Glasübergangstemperatur der Komponente F.2 bei <10 °C, vorzugsweise bei <0 °C, besonders bevorzugt bei <-10 °C liegt.
Besonders bevorzugte Propfgrundlagen F.2 sind ABS-Polymerisate (Emulsions-, Masse-und Suspensions-ABS) wobei ABS für Acrylnitril-Butadien-Styrol steht, wie sie z.B. in der DE-A 2 035 390 (=US-A 3 644 574) oder in der DE-A 2 248 242 (=GB-A 1 409 275) bzw. in Ullmann, Enzyklopädie der Technischen Chemie, Bd. 19 (1980), S. 280 ff. beschrieben sind. Der Gelanteil der Pfropfgrundlage F.2 beträgt bevorzugt mindestens 30 Gew.-%, besonders bevorzugt mindestens 40 Gew.-% (in Toluol gemessen).
Die Elastomermodifikatoren bzw. Pfropfpolymerisate werden durch radikalische Polymerisation, bevorzugt durch Emulsions-, Suspensions-, Lösungs- oder Massepolymerisation, insbesondere durch Emulsions- oder Massepolymerisation hergestellt.
Besonders geeignete Pfropfkautschuke sind auch ABS-Polymerisate, die durch Redox-Initiierung mit einem Initiatorsystem aus organischem Hydroperoxid und Ascorbinsäure gemäß US-A 4 937 285 hergestellt werden.
Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten auch solche Produkte verstanden, die durch (Co)Polymerisation der Pfropfmonomere in Gegenwart der Pfropfgrundlage gewonnen werden und bei der Aufarbeitung mit anfallen.
Ebenfalls geeignete Acrylatkautschuke basieren auf Pfropfgrundlagen F.2 die vorzugsweise Polymerisate aus Acrylsäurealkylestern, gegebenenfalls mit bis zu 40 Gew.-%, bezogen auf F.2 anderen polymerisierbaren, ethylenisch ungesättigten Monomeren. Zu den bevorzugten polymerisierbaren Acrylsäureestern gehören $C_1$-$C_8$-Alkylester, vorzugsweise Methyl-, Ethyl-, Butyl-, n-Octyl- und 2-Ethylhexylester; Halogenalkylester, vorzugsweise Halogen-Ci-Cs-alkylester, vorzugsweise Chlorethylacrylat, Glycidylester sowie Mischungen dieser Monomeren. Dabei sind Propfpolymerisate mit Butylacrylat als Kern und Methylmethacrylaten als Schale, insbesondere Paraloid® EXL2300, Fa. Dow Corning Corporation, Midland Michigan, USA, besonders bevorzugt.
Weitere bevorzugt geeignete Pfropfgrundlagen gemäß F.2 sind Silikonkautschuke mit pfropfaktiven Stellen, wie sie in DE-A 3 704 657 (= US 4 859 740), DE-A 3 704 655 (= US 4 861 831), DE-A 3 631 540 (= US 4 806 593) und DE-A 3 631 539 (= US 4 812 515) beschrieben werden.
Bevorzugte Propfpolymerisate mit einem Silikonanteil sind solche, die Methylmethacrylat oder Styrol-Acrylnitril als Schale und ein Silikon/Acrylat-Propf als Kern aufweisen. Unter solchen mit Styrol-Acrylnitril als Schale kann z.B. Metablen® SRK200 eingesetzt werden. Unter solchen mit Methylmethacrylat als Schale können z.B. Metablen® S2001, Metablen® S2030 und/oder Metablen® SX-005 eingesetzt werden. Besonders bevorzugt wird Metablen® S2001 eingesetzt. Die Produkte mit dem Handelsnamen Metablen® sind erhältlich bei Mitsubishi Rayon Co., Ltd., Tokio, Japan.
Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, bevorzugt Ethylenglykoldimethacrylat, Allylmethacrylat; mehrfach ungesättigte heterocyclische Verbindungen, bevorzugt Trivinyl- und Triallylcyanurat; polyfunktionelle Vinylverbindungen, bevorzugt Di- und Trivinylbenzole; aber auch Triallylphosphat und Diallylphthalat.

Bevorzugte vernetzende Monomere sind Allylmethacrylat, Ethylenglykoldimethacrylat, Diallylphthalat und heterocyclische Verbindungen, die mindestens 3 ethylenisch ungesättigte Gruppen aufweisen.

Besonders bevorzugte vernetzende Monomere sind die cyclischen Monomere Triallylcyanurat, Triallylisocyanurat, Triacryloylhexahydro-s-triazin, Triallylbenzole. Die Menge der vernetzten Monomere beträgt vorzugsweise 0,02 bis 5 Gew.-%, insbesondere 0,05 bis 2 Gew.-%, bezogen auf die Pfropfgrundlage F.2.

Bei cyclischen vernetzenden Monomeren mit mindestens 3 ethylenisch ungesättigten Gruppen ist es vorteilhaft, die Menge auf unter 1 Gew.-% der Pfropfgrundlage F.2 zu beschränken.

Bevorzugte "andere" polymerisierbare, ethylenisch ungesättigte Monomere, die neben den Acrylsäureestern gegebenenfalls zur Herstellung der Pfropfgrundlage F.2 dienen können, sind Acrylnitril, Styrol, $\alpha$-Methylstyrol, Acrylamide, Vinyl-$C_1$-$C_6$-alkylether, Methylmethacrylat, Glycidylmethacrylat, Butadien. Bevorzugte Acrylatkautschuke als Pfropfgrundlage F.2 sind Emulsionspolymerisate, die einen Gelgehalt von mindestens 60 Gew.-% aufweisen.

Neben Elastomermodifikatoren, die auf Propfpolymeren beruhen, können ebenfalls nicht auf Propfpolymeren basierende Elastomermodifikatoren eingesetzt werden, die Glasübergangstemperaturen < 10 °C, vorzugsweise < 0 °C, besonders bevorzugt < -20 °C aufweisen. Bevorzugt gehören hierzu Elastomere mit einer Blockcopolymerstruktur sowie weiterhin thermoplastisch aufschmelzbare Elastomere, insbesondere EPM-, EPDM- und/oder SEBS-Kautschuke (EPM = Ethylen-Propylen-Copolymer, EPDM = Ethylen-Propylen-Dien-Kautschuk und SEBS = Styrol-Ethen-Buten-Styrol Copolymer).

Bevorzugt als Komponente F) einzusetzende **Flammschutzmittel** sind von den Komponenten B) und C) verschiedene phosphorhaltige Verbindungen auszuwählen aus der Gruppe der mono- und oligomeren Phosphor- und Phosphonsäureester, Phosphonatamine, Phosphonate, insbesondere Aluminiumphosphonate, Triphosphate, insbesondere Aluminiumdihydrogentriphosphat, Phosphite, Hypophosphite, Phosphinoxide und Phosphazene. Besonders bevorzugt sind Phenoxyphosphazenoligomere. Die Phosphazene und deren Herstellung sind z.B. in EP-A 728 811, DE-A 1961668 und WO-A 97/40092 beschrieben. Besonders bevorzugt werden erfindungsgemäß ringförmige Phenoxyphosphazene wie 2,2,4,4,6,6-Hexahydro-2,2,4,4,6,6-hexaphenoxytriazatriphosphorine [CAS Nr. 1184-10-7] und/oder solche, wie sie z.B. von der Fa. Fushimi Pharmaceutical Co. Ltd, Kagawa, Japan unter der Bezeichnung Rabitle® FP110 [CAS-Nr. 1203646-63-2] erhältlich sind, eingesetzt.

Ebenso können von Komponente D) verschiedene stickstoffhaltige Flammschutzmittel einzeln oder im Gemisch als Flammschutzmittel der Komponente F) eingesetzt werden. Bevorzugt sind Guanidinsalze, insbesondere Guanidincarbonat, Guanidincyanurat prim., Guanidinphosphat prim., Guanidinphosphat sec., Guanidinsulfat prim., Guanidinsulfat sec., Pentaerythritborsäureguanidin, Neopentylglycolborsäureguanidin, Harnstoffphosphat sowie Harnstoffcyanurat. Darüber hinaus können Umsetzungsprodukte von Melem, Melam, Melon mit kondensierten Phosphorsäuren Verwendung finden. Geeignet sind ebenfalls Tris(hydroxyethyl)isocyanurat oder dessen Umsetzungsprodukte mit Carbonsäuren, Benzoguanamin und dessen Addukte bzw.

Salze sowie dessen am Stickstoff substituierte Produkte sowie deren Salze und Addukte. Als weitere stickstoffhaltige Komponenten kommen Allantoin-Verbindungen, sowie deren Salze mit Phosphorsäure, Borsäure oder Pyrophosphorsäure sowie Glycolurile oder deren Salze in Frage. Weitere bevorzugte stickstoffhaltige Flammschutzmittel verschieden von Komponente D) sind die Reaktionsprodukte aus Trichlortriazin, Piperazin und Morpholin gemäß CAS Nr. 1078142-02-5, insbesondere MCA PPM Triazin HF der Fa. MCA Technologies GmbH, Biel-Benken, Schweiz.

Auch andere hier nicht speziell erwähnte Flammschutzmittel oder Flammschutzmittelsynergisten können als Komponente F) zum Einsatz kommen. Hierzu zählen auch rein anorganische Phosphorverbindungen verschieden von Komponente C), insbesondere roter Phosphor oder Borphosphathydrat. Ferner können auch mineralische Flammschutzadditive oder Salze aliphatischer und aromatischer Sulfonsäuren, insbesondere Metallsalze der 1-Perfluorbutansulfonsäure eingesetzt werden. Infrage kommen ferner Flammschutzmittelsynergisten aus der Gruppe der sauerstoff-, stickstoffoder schwefelhaltigen Metallverbindungen worin Metall für Zink, Molybdän, Calcium, Titan, Magnesium oder Bor steht, bevorzugt Zinkoxid, Zinkborat, Zinkstannat, Zinkhydroxystannat, Zinksulfid, Molybdänoxid, sofern nicht bereits als Farbmittel eingesetzt Titandioxid, Magnesiumcarbonat, Calciumcarbonat, Calciumoxid, Titannitrid, Bornitrid, Magnesiumnitrid, Zinknitrid, Calciumborat, Magnesiumborat oder deren Mischungen.

Weitere bevorzugt als Komponente F) einzusetzende und geeignete Flammschutzadditive sind Kohlebildner, besonders bevorzugt Poly-(2,6-diphenyl-1,4-phenyl)ether, insbesondere Poly(2,6-dimethyl-1,4-phenylen)ether [CAS Nr. 25134-01-4], Phenol-Formaldehydharze, Polycarbonate, Polyimide, Polysulfone, Polyethersulfone oder Polyetherketone, sowie Antitropfmittel, insbesondere Tetrafluorethylenpolymerisate. Die Tetrafluorethylenpolymerisate können in Reinform oder aber in Kombination mit anderen Harzen, bevorzugt Styrolacrylnitril (SAN), oder Acrylaten, vorzugsweise Methylmethacrylat bzw. Butylacrylat, eingesetzt werden. Ein insbesondere bevorzugt geeignetes Beispiel für Tetrafluorethylen-Styrolacrylnitril-Harze ist z.B. Cycolac® INP 449 [CAS-Nr. 1427364-85-9] der Fa. Sabic Corp., Riad, Saudi Arabien; ein insbesondere bevorzugt geeignetes Beispiel für Tetrafluorethylen-Acrylat-Harze ist z.B. Metablen A3800 [CAS-Nr. 639808-21-2] der Fa. Mitsubishi Rayon Co., Ltd., Tokio, Japan. Antitropfmittel enthaltend Tetrafluorethylenpolymerisate werden erfindungsgemäß als Komponente F) bevorzugt in Mengen im Bereich von 0,01 bis 1 Gew.-%, besonders bevorzugt im Bereich von 0,1 bis 0,6 Gew.-% eingesetzt.

Die als Komponente F) zusätzlich einzusetzenden Flammschutzmittel können in Reinform, sowie über Masterbatche oder Kompaktate dem Polyalkylentherephthalat oder Polycycloalkylenterephthalat zugesetzt werden.

Als Komponente F) bevorzugt einzusetzende **Thermostabilisatoren** sind ausgewählt aus der Gruppe der schwefelhaltigen Stabilisatoren, insbesondere Sulfide, Dialkylthiocarbamaten oder Thiodipropionsäuren, außerdem solche ausgewählt aus der Gruppe der Eisensalze und der Kupfersalze, hier insbesondere Kupfer(I)iodid, die bzw. das bevorzugt in Kombination mit Kaliumiodid und/oder Natriumhypophosphit $NaH_2PO_2$ eingesetzt werden bzw. wird, ferner sterisch gehinderte Amine, insbesondere Tetrametyhlpiperidin-Derivate, aromatische sekundäre Amine, insbesondere Diphenylamine, Hydrochinone, substituierte Resorcine, Salicylate, Benzotriazole und Benzophenone, ferner sterisch gehinderte Phenole und aliphatisch oder aromatisch substituierte Phosphite sowie verschieden substituierte Vertreter dieser Gruppen.

Unter den sterisch gehinderten Phenolen werden bevorzugt solche mit mindestens einem 3-Tert.-butyl-4-hydroxy-5-methylphenyl- und/oder mindestens einem 3,5-Di-(tert.-butyl-4-hydroxyphenyl)-Baustein eingesetzt, wobei 1,6-Hexandiol-bis[3-(3,5-di-tert.-butyl-4-hydroxyphenyl)-propionat] [CAS-Nr. 35074-77-2] (Irganox® 259 der Fa. BASF SE, Ludwigshafen, Deutschland), Pentaerythril-tetrakis-[3-(3,5-di-tert.-butyl-4-hydroxyphenyl)-propionat] [CAS-Nr. 6683-19-8] (Irganox® 1010 der Fa. BASF SE) und 3,9-Bis[2-[3-(3-tert-butyl-4-hydroxy-5-methylphenyl)propionyloxy]-1,1-dimethylethyl]-2,4,8,10-tetraoxaspiro[5.5]undecane [CAS-Nr. 90498-90-1] (ADK Stab® AO 80) besonders bevorzugt sind. ADK Stab® AO 80 ist ein Handelsprodukt der Fa. Adeka-Palmerole SAS, Mulhouse, Frankreich.

Unter den aliphatisch oder aromatisch substituierten Phosphiten wird bevorzugt Bis(2,4-dicumylphenyl)-pentaerythritol-diphosphit [CAS Nr. 154862-43-8], das z.B. von der Fa. Dover Chemical Corp., Dover, USA unter dem Handelsnamen Doverphos® S9228 angeboten wird und Tetrakis(2,4-di-tert-butylphenyl)-1,1-biphenyl-4,4'-diylbisphosphonit [CAS Nr. 38613-77-3] eingesetzt, das z.B. als Hostanox® P-EPQ von der Fa. Clariant International Ltd., Muttenz, Schweiz bezogen werden kann.

In bevorzugter Ausführungsform betrifft die vorliegende Erfindung Zusammensetzungen und daraus herzustellende Formmassen sowie Erzeugnisse enthaltend A) Polybutylenterephthalat, B) Aluminiumtrisdiethylphosphinat und als C) Zinkbis(dihydrogenphosphat).

In bevorzugter Ausführungsform betrifft die vorliegende Erfindung zudem Zusammensetzungen und daraus herzustellende Formmassen sowie Erzeugnisse enthaltend A) Polybutylenterephthalat, B) Aluminiumtrisdiethylphosphinat und als C) Zink-bis(dihydrogenphosphat)-dihydrat.

In bevorzugter Ausführungsform betrifft die vorliegende Erfindung zudem Zusammensetzungen und daraus herzustellende Formmassen sowie Erzeugnisse enthaltend A) Polybutylenterephthalat, B) Aluminiumtrisdiethylphosphinat und als C) Zinkpyrophosphat.

In bevorzugter Ausführungsform betrifft die vorliegende Erfindung zudem Zusammensetzungen und daraus herzustellende Formmassen sowie Erzeugnisse enthaltend A) Polybutylenterephthalat, B) Aluminiumtrisdiethylphosphinat, als C) Zink-bis(dihydrogenphosphat)-dihydrat und D) Melamincyanurat.

In bevorzugter Ausführungsform betrifft die vorliegende Erfindung zudem Zusammensetzungen und daraus herzustellende Formmassen sowie Erzeugnisse enthaltend A) Polybutylenterephthalat, B) Aluminiumtrisdiethylphosphinat, als C) Zink-bis(dihydrogenphosphat)-dihydrat, D) Melamincyanurat und E) Glasfasern.

**Verwendung**

Die vorliegende Erfindung betrifft aber auch die Verwendung der erfindungsgemäßen Zusammensetzungen, insbesondere in Form von Formmassen, zur Herstellung kriechstromfester Erzeugnisse, bevorzugt elektrischer oder elektronischer Baugruppen und Komponenten.

Die vorliegende Erfindung betrifft aber auch die Verwendung der erfindungsgemäßen Zusammensetzungen zur Steigerung der Kriechstromfestigkeit Polyester basierter Erzeugnisse, bevorzugt von Erzeugnissen der Elektro- oder Elektronikindustrie, insbesondere Erzeugnissen der Elektro- oder Elektronikindustrie, wobei als Polyester wenigstens ein Polyalkylenterephthalat und/oder wenigstens ein Polycycloalkylenterephthalat, insbesondere wenigstens Polybutylenterephthalat eingesetzt wird.

**Verfahren**

Die vorliegende Erfindung betrifft aber auch ein Verfahren zur Herstellung von Erzeugnissen, bevorzugt für die Elektro- oder Elektronikindustrie, besonders bevorzugt elektronischer oder elektrischer Baugruppen und Komponenten, indem man erfindungsgemäße Zusammensetzungen zu einer Formmasse vermischt. Zusätzlich können diese Formmassen in Form eines Strangs ausgetragen, bis zur Granulierfähigkeit abkühlt und granuliert werden, bevor sie als Matrixmaterial einem Spritzguss oder einer Extrusion, bevorzugt einem Spritzguss, unterzogen werden.

Bevorzugt erfolgt das Vermischen bei Temperaturen im Bereich von 240 bis 310°C, bevorzugt im Bereich von 260 bis 300°C, besonders bevorzugt im Bereich von 270 bis 295°C in der Schmelze. Insbesondere bevorzugt wird hierzu ein Zweiwellenextruder eingesetzt.

In einer Ausführungsform wird das Granulat, das die erfindungsgemäße Zusammensetzung enthält, getrocknet, bevorzugt bei Temperaturen im Bereich um 120°C im Vakuumtrockenschrank oder im Trockenlufttrockner für eine Zeitdauer im Bereich von 2h, bevor es als Matrixmaterial dem Spritzguss oder einem Extrusionsverfahren zwecks Herstellung erfindungsgemäßer Erzeugnisse unterzogen wird.

Die vorliegende Erfindung betrifft aber auch ein Verfahren zur Verbesserung der Kriechstromfestigkeit Polyester basierter Erzeugnisse, indem man erfindungsgemäße Zusammensetzungen in Form von Formmassen als Matrixmaterial mittels Spritzguss oder Extrusion verarbeitet und als Polyester wenigstens ein Polyalkylenterephthalat und/oder wenigstens ein Polycycloalkylenterephtalat, insbesondere wenigstens Polybutylenterephthalat einsetzt.

Die Verfahren des Spritzgusses sowie der Extrusion thermoplastischer Formmassen sind dem Fachmann bekannt.

Erfindungsgemäße Verfahren zur Herstellung von Polyester basierten Erzeugnissen durch Extrusion oder Spritzguss arbeiten bei Schmelzetemperaturen im Bereich von 240 bis 330°C, bevorzugt im Bereich von 260 bis 300°C, besonders bevorzugt im Bereich von 270 bis 290°C sowie gegebenenfalls zusätzlich bei Drücken von maximal 2500 bar, bevorzugt bei Drücken von maximal 2000 bar, besonders bevorzugt bei Drücken von maximal 1500 bar und ganz besonders bevorzugt bei Drücken von maximal 750 bar.

Bei der sequentiellen Coextrusion werden zwei unterschiedliche Materialien in alternierender Folge hintereinander ausgestoßen. Auf diese Weise entsteht ein Vorformling mit in Extrusionsrichtung abschnittsweise unterschiedlicher Materialzusammensetzung. Es können bestimmte Artikelabschnitte durch entsprechende Materialauswahl mit spezifisch erforderlichen Eigenschaften ausgestattet werden, beispielsweise für Artikel mit weichen Enden und hartem Mittelteil oder integrierten weichen Faltenbalg-Bereichen (Thielen, Hartwig, Gust, "Blasformen von Kunststoffhohlkörpern", Carl Hanser Verlag, München 2006, Seiten 127-129).

Das Verfahren des Spritzgusses zeichnet sich dadurch aus, dass eine die erfindungsgemäßen Zusammensetzungen enthaltende Formmasse, bevorzugt in Granulatform, in einem beheizten zylindrischen Hohlraum aufgeschmolzen (plastifiziert) und als Spritzmasse unter Druck in einen temperierten Hohlraum gespritzt wird. Nach dem Abkühlen (Erstarren) der Masse wird das Spritzgussteil entformt.

Man unterscheidet

1. Plastifizieren / Aufschmelzen
2. Einspritzphase (Füllvorgang)
3. Nachdruckphase (wegen thermischer Kontraktion bei der Kristallisation)
4. Entformen.

Siehe hierzu http://de.wikipedia.org/wiki/Spritzgie%C3%9Fen. Eine Spritzgießmaschine besteht aus einer Schließeinheit, der Spritzeinheit, dem Antrieb und der Steuerung. Zur Schließeinheit gehören feste und bewegliche Aufspannplatten für das Werkzeug, eine Stirnplatte sowie Säulen und Antrieb der beweglichen Werkzeugaufspannplatte (Kniehebelgelenk oder hydraulische Schließeinheit).

Eine Spritzeinheit umfasst den elektrisch beheizbaren Zylinder, den Antrieb der Schnecke (Motor, Getriebe) und die Hydraulik zum Verschieben der Schnecke und Spritzeinheit. Die Aufgabe der Spritzeinheit besteht darin, das Pulver bzw. das Granulat aufzuschmelzen, zu dosieren, einzuspritzen und nachzudrücken (wegen Kontraktion). Das Problem des Rückflusses der Schmelze innerhalb der Schnecke (Leckströmung) wird durch Rückstromsperren gelöst.

Im Spritzgießwerkzeug wird dann die einströmende Schmelze gelöst, gekühlt und somit das zu fertigende Erzeugnis gefertigt. Notwendig dazu sind immer zwei Werkzeughälften. Beim Spritzguss unterscheidet man folgende Funktionskomplexe:

- Angusssystem
- Formbildende Einsätze
- Entlüftung
- Maschinen- und Kraftaufnahme

- Entformungssystem und Bewegungsübertragung
- Temperierung

Im Gegensatz zum Spritzguss wird bei der Extrusion ein endlos geformter Kunststoffstrang aus einer erfindungsgemäßen Formmasse im Extruder eingesetzt, wobei der Extruder eine Maschine zur Herstellung thermoplastischer Formstücke ist. Verwiesen sei hier auf http://de.wikipedia.org/wiki/Extrusionsblasformen. Man unterscheidet Einschneckenextruder und Doppelschneckenextruder sowie die jeweiligen Untergruppen konventioneller Einschneckenextruder, förderwirksamer Einschneckenextruder, gegenläufiger Doppelschneckenextruder und gleichläufiger Doppelschneckenextruder.

Extrusionsanlagen bestehen aus Extruder, Werkzeug, Nachfolgeeinrichtung, Extrusionsblasformen. Extrusionsanlagen zum Herstellen von Profilen bestehen aus: Extruder, Profil-Werkzeug, Kalibrierung, Kühlstrecke, Raupen- und Rollenabzug, Trennvorrichtung und Kipprinne.

Die vorliegende Erfindung betrifft folglich auch Erzeugnisse, insbesondere kriechstromfeste Erzeugnisse, erhältlich durch Extrusion, bevorzugt Profil-Extrusion, oder Spritzguss der aus den erfindungsgemäßen Zusammensetzungen erhältlichen Formmassen.

**Beispiele**

Zum Nachweis der erfindungsgemäß beschriebenen Verbesserungen bei Kriechstromfestigkeit und Mechanik wurden zunächst durch Compoundierung entsprechende Polyester Formmassen angefertigt. Die einzelnen Komponenten wurden hierzu in einem Zweiwellenextruder (ZSK 32 Mega Compounder der Fa. Coperion Werner & Pfleiderer (Stuttgart, Deutschland)) bei Temperaturen im Bereich von 260 bis 300°C gemischt, als Strang ausgetragen, bis zur Granulierfähigkeit abgekühlt und granuliert. Nach dem Trocknen (in der Regel 2h bei 120°C im Vakuumtrockenschrank) erfolgte die Verarbeitung des Granulates zu Prüfkörpern.

Die Prüfkörper für die in Tabelle 2 aufgeführten Untersuchungen wurden auf einer Spritzgießmaschine des Typs Arburg 320-210-500 bei einer Massetemperatur von 260°C und einer Werkzeugtemperatur von 80°C verspritzt:

- Prüfstäbe 80mm • 10mm • 4 mm (gem. ISO 178 bzw. ISO180/1 U)
- ASTM-Normprüfkörper für die UL94V-Prüfung
- Prüfkörper für die Glühdrahtprüfung nach DIN EN 60695-2-13
- Prüfköper für die Messung der Kriechstromfestigkeit nach IEC60112

Die Biegefestigkeit und die Randfaserdehnung erhielt man aus Biegeversuchen in Anlehnung an ISO178 an Prüfkörpern der Abmessung 80 mm • 10 mm • 4 mm.

Die Schlagzähigkeit erhielt man nach IZOD in Anlehnung an ISO180-1U an Prüfkörpern der Abmessung 80 mm • 10 mm • 4 mm.

Die Flammwidrigkeit wurde nach der Methode UL94V (Underwriters Laboratories Inc. Standard of Safety, "Test for Flammability of Plastic Materials for Parts in Devices and Appliances", S. 14 bis S. 18 Northbrook 1998) bestimmt. Die Prüfkörper hatten die Abmessung 125 mm • 13 mm • 0,75 mm.

Die Glühdrahtbeständigkeit wurde anhand der Glühdrahtentzündlichkeitsprüfung GWIT (Glow-Wire-Ignition-Temperature) nach DIN EN 60695-2-13 bestimmt. Bei der GWIT-Prüfung wird die Glühdrahtentzündungstemperatur angegeben, die 25K (bzw. 30K bei Temperaturen im Bereich von 900°C bis 960°C) höher ist, als die maximale Glühdrahttemperatur, die in 3 aufeinander folgenden Tests auch während der Einwirkzeit des Glühdrahtes nicht zur Entzündung führt. Als Entzündung gilt dabei eine Flamme mit Brennzeit $\geq$ 5sec. Für die Prüfungen wurden Rundplatten mit einem Durchmesser von 80mm und einer Dicke von 0,75mm verwendet.

Die Kriechstromfestigkeit (engl. "Comparative Tracking Index") wurde in Anlehnung an IEC 60112 an Prüfkörpern der Abmessung 60mm • 40mm • 4mm bestimmt.

Die Schmelzviskosität wurde als Schmelze-Volumenfließrate (engl. MVR = Melt Volume-flow Rate" in Anlehnung an ISO1133-1 jeweils bei einer Temperatur von 260°C und 280°C mit einem Auflagegewicht von jeweils 2,16kg am Granulat bestimmt, wobei zur Beurteilung der Temperaturstabilität der Zusammensetzung jeweils eine Verweilzeit von 5 min eingehalten wurde. Bei vergleichbarer Ausgangsviskosität des eingesetzten Polymers ist der MVR ein Maß für den Abbau des Polymers infolge thermischer Belastung. Eine hohe Zahl für den MVR steht für eine niedrige Schmelzviskosität und damit einen stärkeren thermischen Abbau.

In den Versuchen wurden verwendet:

Komponente A): Lineares Polybutylenterephthalat (Pocan® B 1300, Handelsprodukt der Lanxess Deutschland GmbH, Leverkusen, Deutschland) mit einer Intrinsischen Viskosität von 93 $cm^3/g$ (gemessen in Phenol : 1,2-Dichlorbenzol = 1:1 bei 25°C)

Komponente B): Aluminium-tris(diethylphosphinat), [CAS-Nr. 225789-38-8] (Exolit® OP1230 der Fa. Clariant SE, Muttenz, Schweiz)

Komponente C): Zink-bis[dihydrogenphosphat]-dihydrat [CAS-Nr. 13986-21-5] (Z21-82 der Fa. Chemische Fabrik Budenheim KG, Budenheim, Deutschland)

Komponente D): Melamincyanurat, (Melapur® MC25, der Fa. BASF SE, Ludwigshafen, Deutschland)

Komponente E): Mit silanhaltigen Verbindungen beschlichtete Glasfaser mit einem Durchmesser von 10 µm (CS 7967, Handelsprodukt der Lanxess N.V., Antwerpen, Belgien)

Komponente F1): Bariumsulfat [CAS-Nr.7727-43-7] (BLANC FIXE Super F der Fa. Sachtleben Chemie GmbH, Duisburg, Deutschland)

Als weitere Additive der Komponente F) wurden in den Beispielen als Komponente F2) die folgenden, für die Verwendung in flammgeschützten thermoplastischen Polyestern gebräuchlichen Komponenten eingesetzt:

Entformungsmittel: Pentaerythrit-tetrastearat (PETS) [CAS Nr. 115-83-3] (Loxiol® VPG 861, Fa. Cognis Deutschland GmbH, Düsseldorf, Deutschland)

Thermostabilisator: Tetrakis(2,4-di-tert-butylphenyl)-1,1 -biphenyl-4,4'-diylbisphosphonit [CAS Nr. 38613-77-3] (Hostanox® P-EPQ von der Fa. Clariant International Ltd., Muttenz, Schweiz)

Antidripping-Additiv: Polytetrafluorethylen, [CAS-Nr.9002-84-0] (Dyneon® PA 5932 der Fa. Dyneon GmbH & Co KG, Neuss, Deutschland)

Die verwendeten weiteren Additive (Komponente F2)) stimmen für entsprechende Vergleichsbeispiele und Beispiele jeweils in Art und Menge überein und zwar mit F2) = 0,7 Gew.-%.

Die Summe der Anteile der Komponenten ergänzt sich jeweils zu 100 Gew.-%.

**Tabelle 1** (alle Angaben in Gew.-%)

| | **Beispiel 1 nicht erfindungsgemäß** | **Beispiel 2 nicht erfindungsgemäß** | **Vergleichsbeispiel** |
|---|---|---|---|
| A) | 51 | 49,5 | 51,3 |
| B) | 16,5 | 16,5 | 16,5 |
| C) | 0,3 | 0,3 | - |
| D) | 6,5 | 6,5 | 6,5 |
| E) | 25 | 25 | 25 |
| F1) | | 1,5 | |
| F2) | 0,7 | 0,7 | 0,7 |

**Tabelle 2**

| | **Einheit** | **Beispiel 1 nicht erfindungsgemäß** | **Beispiel 2 nicht erfindungsgemäß** | **Vergleichsbeispiel** |
|---|---|---|---|---|
| IZOD | [$kJ/m^2$] | 30 | 27 | 23 |
| Biegefestigkeit | [MPa] | 145 | 141 | 135 |
| Randfaserdehnung | [%] | 2,4 | 2,3 | 2 |

(fortgesetzt)

| | Einheit | Beispiel 1 nicht erfindungsgemäß | Beispiel 2 nicht erfindungsgemäß | Vergleichsbeispiel |
|---|---|---|---|---|
| Kriechstromfestigkeit | [V] | 575 | 600 | 550 |
| MVR 280°C/2,16kg | [$cm^3$/ 10min] | 13,9 | 15 | 29,7 |
| MVR 260°C/2,16kg | [$cm^3$/ 10min] | 6,9 | 6,7 | 14,4 |
| GWIT | [°C] | >775 | >775 | 775 |
| UL94 | [Klasse] | V-0 | V-0 | V-0 |

Die Beispiele zeigen, dass bei Verwendung von Komponente C) gegenüber dem Vergleich ohne Komponente C) eine Verbesserung bei der Kriechstromfestigkeit und bei den mechanischen Eigenschaften erzielt werden kann. Die Verbesserung der mechanischen Eigenschaften zeigt sich sowohl in der erhöhten Schlagzähigkeit als auch in der Verbesserung der Randfaserdehnung und Biegefestigkeit. Die verbesserten mechanischen Eigenschaften lassen sich auch in Zusammenhang mit der gegenüber dem Vergleichsbeispiel ohne Komponente C) deutlich kleineren MVR-Werten sehen, die auf einen geringeren Polymerabbau hinweisen. Alle Verbesserungen gehen ohne eine negative Beeinträchtigung der Flammwidrigkeit einher.

## Patentansprüche

**1.** Zusammensetzungen enthaltend

A) wenigstens ein Polyalkylenterephthalat oder Polycycloalkylenterephthalat,
B) wenigstens ein organisches Phosphinsäuresalz der Formel (I) und/oder wenigstens ein organisches Diphosphinsäuresalz der Formel (II) und/oder deren Polymere,

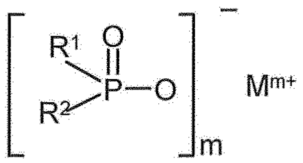 (I) 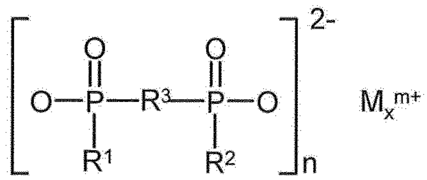 (II)

worin

$R^1$, $R^2$ gleich oder verschieden sind und für ein lineares oder verzweigtes $C_1$-$C_6$-Alkyl, und/oder für $C_6$-$C_{14}$-Aryl stehen,
$R^3$ für lineares oder verzweigtes $C_1$-$C_{10}$-Alkylen, $C_6$-$C_{10}$-Arylen oder für $C_1$-$C_6$-Alkyl-$C_6$-$C_{10}$-arylen oder $C_6$-$C_{10}$-Aryl-$C_1$-$C_6$-alkylen steht,
M für Aluminium, Zink oder Titan steht,
m für eine ganze Zahl im Bereich von 1 bis 4 steht;
n für eine ganze Zahl im Bereich von 1 bis 3 steht, und
x für 1 und 2 steht,

wobei n, x und m in Formel (II) gleichzeitig nur solche ganzen Zahlen annehmen können, dass das Diphosphinsäuresalz der Formel (II) als Ganzes ungeladen ist, und
C) wenigstens ein anorganisches Phosphatsalz aus der Gruppe der Metallhydrogenphosphate, der Metalldihydrogenphosphate, der Metalldihydrogenpyrophosphate und/oder der Metallpyrophosphate, wobei Metall für Magnesium steht.

**2.** Zusammensetzungen gemäß Anspruch 1, **dadurch gekennzeichnet, dass** zusätzlich zu den Komponenten A), B) und C) noch Komponente D) wenigstens ein stickstoffhaltiges Flammschutzmittel eingesetzt wird.

**3.** Zusammensetzungen gemäß einem der Ansprüche 1 oder 2, **dadurch gekennzeichnet, dass** diese zusätzlich zu den Komponenten A) bis D) oder anstelle von D) noch E) wenigstens einen Füll- oder Verstärkungsstoff enthalten.

**4.** Zusammensetzungen gemäß einem der Ansprüche 1 bis 3, **dadurch gekennzeichnet, dass** diese zusätzlich zu den Komponenten A) bis E) oder anstelle von C) und/oder D) und/oder E) noch F) wenigstens ein weiteres Additiv enthalten, das unterschiedlich zu den Komponenten B), C), D) und E) ist, vorzugsweise Titandioxid.

**5.** Zusammensetzungen gemäß einem der Ansprüche 1 bis 4, **dadurch gekennzeichnet, dass** wenigstens ein Polyalkylenterephthalat auszuwählen aus Polyethylenterephthalat, Polybutylenterephthalat oder Poly-1,4-cyclohexandimethanolterephthalat eingesetzt wird.

**6.** Zusammensetzungen gemäß einem der Ansprüche 1 bis 5, **dadurch gekennzeichnet, dass** M in den Formeln (I) oder (II) für Aluminium steht.

**7.** Zusammensetzungen gemäß einem der Ansprüche 1 bis 6, **dadurch gekennzeichnet, dass** $R^1$ und $R^2$ in den Formeln (I) und (II) gleich oder verschieden sind und $C_1$-$C_6$-Alkyl, linear oder verzweigt, und/oder Phenyl bedeuten.

**8.** Zusammensetzungen gemäß einem der Ansprüche 2 bis 7, **dadurch gekennzeichnet, dass** als Komponente D) Melamincyanurat, Melaminpolyphosphat, Bis-Melamin-zinko-diphosphat und/oder Bis-Melamin-alumotriphosphat eingesetzt werden.

**9.** Zusammensetzungen gemäß einem der Ansprüche 3 bis 8, **dadurch gekennzeichnet, dass** als Füll- oder Verstärkungsstoff Glasfasern eingesetzt werden.

**10.** Zusammensetzungen gemäß einem der Ansprüche 4 bis 9, **dadurch gekennzeichnet, dass** als Additiv Bariumsulfat eingesetzt wird.

**11.** Formmassen erhältlich durch Mischen der Zusammensetzungen gemäß einem der Ansprüche 1 bis 10 in wenigstens einem Mischwerkzeug, vorzugsweise Compounder.

**12.** Formmassen gemäß Anspruch 11, **dadurch gekennzeichnet, dass** diese zusätzlich zu einem Strang ausgetragen, bis zur Granulierfähigkeit abgekühlt und granuliert werden.

**13.** Zusammensetzungen gemäß der Ansprüche 1 bis 10 und Formmassen gemäß der Ansprüche 11 und 12, **dadurch gekennzeichnet, dass** diese die Komponente A) im Bereich von 68 bis 93,99 Gew.-%, die Komponente B) im Bereich von 6 bis 30 Gew.-% und die Komponente C) im Bereich von 0,01 bis 2 Gew.-% enthalten, wobei die Summe aller Gewichtsprozente stets 100 ergibt.

**14.** Verfahren zur Herstellung von Erzeugnissen, **dadurch gekennzeichnet, dass** man die Formmassen gemäß Anspruch 11 bis 13 einem Spritzguss oder einer Extrusion unterzieht.

**15.** Verwendung der Zusammensetzungen gemäß einem der Ansprüche 1 bis 10 oder der Formmassen gemäß der Ansprüche 11 bis 13 zur Herstellung kriechstromfester Erzeugnisse, bevorzugt elektrischer oder elektronischer Baugruppen und Komponenten.

## Claims

**1.** Compositions comprising

A) at least one polyalkylene terephthalate or polycycloalkylene terephthalate,
B) at least one organic phosphinic salt of the formula (I) and/or at least one organic diphosphinic salt of the formula (II) and/or polymers thereof,

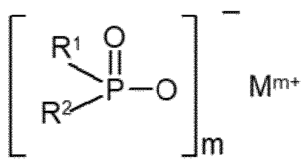

(I)

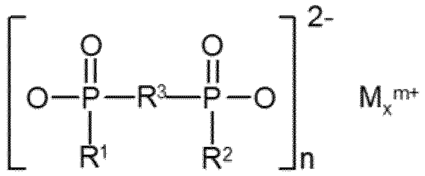

(II)

in which

$R^1$ and $R^2$ are identical or different and are a linear or branched $C_1$-$C_6$ alkyl, and/or are $C_6$-$C_{14}$ aryl,
$R^3$ is linear or branched $C_1$-$C_{10}$ alkylene, $C_6$-$C_{10}$ arylene or $C_1$-$C_6$ alkyl-$C_6$-$C_{10}$ arylene or $C_6$-$C_{10}$ aryl-$C_1$-$C_6$ alkylene,
M is aluminium, zinc or titanium,
m is an integer in the range from 1 to 4;
n is an integer in the range from 1 to 3, and
x is 1 and 2,

where n, x and m in formula (II) may at the same time adopt only those integers such that the diphosphinic salt of the formula (II) as a whole is uncharged, and
C) at least one inorganic phosphate salt from the group of metal hydrogen phosphates, metal dihydrogen phosphates, metal dihydrogen pyrophosphates and/or metal pyrophosphates, metal being magnesium.

**2.** Compositions according to Claim 1, **characterized by** the use in addition to components A) , B) and C) of at least one nitrogen-containing flame retardant component D).

**3.** Compositions according to either of Claims 1 and 2, **characterized in that** additionally to components A) to D) or instead of D) they further comprise E) at least one filler or reinforcing agent.

**4.** Compositions according to any of Claims 1 to 3, **characterized in that** in addition to components A) to E) or instead of C) and/or D) and/or E) they further comprise F) at least one further additive which is different from components B), C), D) and E), preferably titanium dioxide.

**5.** Compositions according to any of Claims 1 to 4, **characterized by** the use of at least one polyalkylene terephthalate to be selected from polyethylene terephthalate, polybutylene terephthalate or poly-1,4-cyclohexanedimethanol terephthalate.

**6.** Compositions according to any of Claims 1 to 5, **characterized in that** M in the formulae (I) or (II) is aluminium.

**7.** Compositions according to any of Claims 1 to 6, **characterized in that** $R^1$ and $R^2$ in the formulae (I) and (II) are identical or different and are $C_1$-$C_6$ alkyl, linear or branched, and/or phenyl.

**8.** Compositions according to any of Claims 2 to 7, **characterized by** the use as component D) of melamine cyanurate, melamine polyphosphate, bismelamine zincodiphosphate and/or bismelamine aluminotriphosphate.

**9.** Compositions according to any of Claims 3 to 8, **characterized in that** glass fibres are used as filler or reinforcing agent.

**10.** Compositions according to any of Claims 4 to 9, **characterized in that** barium sulphate is used as additive.

**11.** Moulding compounds obtainable by mixing the compositions according to any of Claims 1 to 10 in at least one mixer, preferably compounder.

**12.** Moulding compounds according to Claim 11, **characterized in that** additionally they are discharged to form a strand, cooled until pelletizable and pelletized.

**13.** Compositions according to Claims 1 to 10 and moulding compounds according to Claims 11 and 12, **characterized in that** they comprise component A) in the range from 68 to 93.99 wt%, component B) in the range from 6 to 30

wt% and component C) in the range from 0.01 to 2 wt%, the sum of all the weight percentages always making 100.

**14.** Method for producing products, **characterized in that** the moulding compounds according to Claims 11 to 13 are subjected to injection moulding or extrusion.

**15.** Use of the compositions according to any of Claims 1 to 10 or of the moulding compounds according to Claims 11 to 13 for producing tracking-resistant products, preferably electrical or electronic assemblies and components.

## Revendications

**1.** Compositions, contenant :

A) au moins un polyalkylène téréphtalate ou un polycycloalkylène téréphtalate,
B) au moins un sel d'acide phosphinique organique de formule (I) et/ou au moins un sel d'acide diphosphinique organique de formule (II) et/ou leurs polymères,

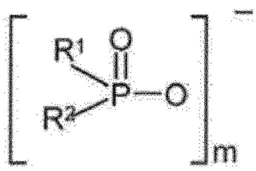 $M^{m+}$ (I) 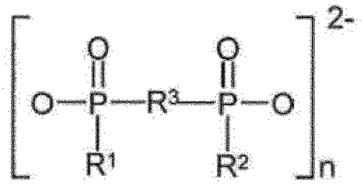 $M_x^{m+}$ (II)

dans lesquelles

$R^1$, $R^2$ sont identiques ou différents, et représentent un alkyle en $C_1$-$C_6$ linéaire ou ramifié, et/ou un aryle en $C_6$-$C_{14}$,
$R^3$ représente un alkylène en $C_1$-$C_{10}$ linéaire ou ramifié, un arylène en $C_6$-$C_{10}$ ou un alkyle en $C_1$-$C_6$-arylène en $C_6$-$C_{10}$ ou un aryle en $C_6$-$C_{10}$-alkylène en $C_1$-$C_6$,
M représente l'aluminium, le zinc ou le titane,
m représente un nombre entier dans la plage allant de 1 à 4,
n représente un nombre entier dans la plage allant de 1 à 3, et
x représente 1 et 2,
n, x et m dans la formule (II) ne pouvant représenter simultanément que des nombres entiers tels que le sel d'acide diphosphinique de formule (II) soit dans son ensemble non chargé, et

C) au moins un sel de phosphate inorganique du groupe constitué par les hydrogénophosphates d'un métal, les dihydrogénophosphates d'un métal, les dihydrogénopyrophosphates d'un métal et/ou les pyrophosphates d'un métal, le métal étant le magnésium.

**2.** Compositions selon la revendication 1, **caractérisées en ce qu'**en plus des composants A), B) et C), un composant D), au moins un agent ignifuge azoté, est également utilisé.

**3.** Compositions selon l'une quelconque des revendications 1 et 2, **caractérisées en ce que** celles-ci contiennent en plus des composants A) à D) ou à la place de D) également E) au moins une charge ou un matériau renforçant.

**4.** Compositions selon l'une quelconque des revendications 1 à 3, **caractérisées en ce que** celles-ci contiennent en plus des composants A) à E) ou à la place de C) et/ou D) et/ou E) également F) au moins un additif supplémentaire, qui est différent des composants B), C), D) et E), de préférence le dioxyde de titane.

**5.** Compositions selon l'une quelconque des revendications 1 à 4, **caractérisées en ce qu'**au moins un polyalkylène téréphtalate choisi parmi le polyéthylène téréphtalate, le polybutylène téréphtalate ou le poly-1,4-cyclohexanediméthanol téréphtalate est utilisé.

**6.** Compositions selon l'une quelconque des revendications 1 à 5, **caractérisées en ce que** M dans la formule (I) ou (II) représente l'aluminium.

**7.** Compositions selon l'une quelconque des revendications 1 à 6, **caractérisées en ce que** $R^1$ et $R^2$ dans les formules (I) et (II) sont identiques ou différents, et signifient un alkyle en $C_1$-$C_6$, linéaire ou ramifié, et/ou un phényle.

**8.** Compositions selon l'une quelconque des revendications 2 à 7, **caractérisées en ce que** du cyanurate de mélamine, du polyphosphate de mélamine, du zinco-diphosphate de bis-mélamine et/ou de l'alumo-triphosphate de bis-mélamine sont utilisés en tant que composant D).

**9.** Compositions selon l'une quelconque des revendications 3 à 8, **caractérisées en ce que** des fibres de verre sont utilisées en tant que charge ou matériau renforçant.

**10.** Compositions selon l'une quelconque des revendications 4 à 9, **caractérisées en ce que** du sulfate de baryum est utilisé en tant qu'additif.

**11.** Matériaux de moulage pouvant être obtenus par mélange des compositions selon l'une quelconque des revendications 1 à 10 dans au moins un outil de mélange, de préférence un malaxeur.

**12.** Matériaux de moulage selon la revendication 11, **caractérisés en ce que** ceux-ci sont en outre déchargés sous la forme d'un extrudat, refroidis jusqu'à pouvoir être granulés et granulés.

**13.** Compositions selon les revendications 1 à 10 et matériaux de moulage selon les revendications 11 et 12, **caractérisés en ce que** ceux-ci contiennent le composant A) dans la plage allant de 68 à 93,99 % en poids, le composant B) dans la plage allant de 6 à 30 % en poids et le composant C) dans la plage allant de 0,01 à 2 % en poids, la somme de tous les pourcentages en poids étant toujours de 100.

**14.** Procédé de fabrication d'articles, **caractérisé en ce que** les matériaux de moulage selon les revendications 11 à 13 sont soumis à un moulage par injection ou une extrusion.

**15.** Utilisation des compositions selon l'une quelconque des revendications 1 à 10 ou des matériaux de moulage selon les revendications 11 à 13 pour la fabrication d'articles résistants au cheminement, de préférence de sous-composants et de composants électriques ou électroniques.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2012139990 A1
- DE 112006001824 T5
- DE 10196299 T1
- WO 9739053 A
- WO 2012025362 A1
- EP 2609173 A1
- WO 2008023074 A1
- DE 2035390 A
- US 3644574 A
- DE 2248242 A
- GB 1409275 A
- US 4937285 A
- DE 3704657 A
- US 4859740 A
- DE 3704655 A
- US 4861831 A
- DE 3631540 A
- US 4806593 A
- DE 3631539 A
- US 4812515 A
- EP 728811 A
- DE 1961668 A
- WO 9740092 A


### In der Beschreibung aufgeführte Nicht-Patentliteratur


- **BODO CARLOWITZ.** Tabellarische Übersicht über die Prüfung von Kunststoffen. Giesel-Verlag, 1992, 16-17
- Kunststoff-Handbuch. Karl Hanser Verlag, 1973, vol. VIII, 695
- *CHEMICAL ABSTRACTS,* 25038-59-9
- *CHEMICAL ABSTRACTS,* 24968-12-5
- *CHEMICAL ABSTRACTS,* 25037-99-4
- *CHEMICAL ABSTRACTS,* 225789-38-8
- *CHEMICAL ABSTRACTS,* 13446-24-7
- *CHEMICAL ABSTRACTS,* 7757-86-0
- *CHEMICAL ABSTRACTS,* 13092-66-5
- *CHEMICAL ABSTRACTS,* 1502-47-2
- *CHEMICAL ABSTRACTS,* 3576-88-3
- *CHEMICAL ABSTRACTS,* 32518-77-7
- *CHEMICAL ABSTRACTS,* 218768-84-4
- *CHEMICAL ABSTRACTS,* 37640-57-6
- Chemie Ingenieur Technik. Wiley-VCH Verlags GmbH, 2000, vol. 3/2000, 273-276
- **C.M. KECK.** Moderne Pharmazeutische Technologie. Freie Universität Berlin, Juni 2007, 1-16
- **M.SCHOßIG.** Schädigungsmechanismen in faserverstärkten Kunststoffen. Vieweg und Teubner Verlag, 2011, vol. 1, 35
- *CHEMICAL ABSTRACTS,* 65997-17-3
- **J.KASTNER et al.** Quantitative Messung von Faserlängen und -verteilung in faserverstärkten Kunststoffteilen mittels μ-Röntgen-Computertomographie. *DGZfP-Jahrestagung,* 2007
- *CHEMICAL ABSTRACTS,* 68604-44-4
- *CHEMICAL ABSTRACTS,* 85116-93-4
- *CHEMICAL ABSTRACTS,* 1592-23-0
- *CHEMICAL ABSTRACTS,* 74388-22-0
- *CHEMICAL ABSTRACTS,* 115-83-3
- *CHEMICAL ABSTRACTS,* 13463-67-7
- *CHEMICAL ABSTRACTS,* 7727-43-7
- *CHEMICAL ABSTRACTS,* 98460-24-3
- *CHEMICAL ABSTRACTS,* 8013-07-8
- **SMITH, MARCH.** March's Advanced Organic Chemistry. Wiley-Interscience, 2001
- *Ullmann, Enzyklopädie der Technischen Chemie,* 1980, vol. 19, 280
- *CHEMICAL ABSTRACTS,* 1184-10-7
- *CHEMICAL ABSTRACTS,* 1203646-63-2
- *CHEMICAL ABSTRACTS,* 1078142-02-5
- *CHEMICAL ABSTRACTS,* 25134-01-4
- *CHEMICAL ABSTRACTS,* 1427364-85-9
- *CHEMICAL ABSTRACTS,* 639808-21-2
- *CHEMICAL ABSTRACTS,* 35074-77-2
- *CHEMICAL ABSTRACTS,* 6683-19-8
- *CHEMICAL ABSTRACTS,* 90498-90-1
- *CHEMICAL ABSTRACTS,* 154862-43-8
- *CHEMICAL ABSTRACTS,* 38613-77-3
- **THIELEN, HARTWIG, GUST.** Blasformen von Kunststoffhohlkörpern. Carl Hanser Verlag, 2006, 127-129
- *CHEMICAL ABSTRACTS,* 13986-21-5
- *CHEMICAL ABSTRACTS,* 9002-84-0